# EUROPEAN PATENT APPLICATION

(11) **EP 3 007 049 A1**
(43) Date of publication of application: **13.04.2016**
(21) Application number: 14804806.9
(22) Date of filing: 13.05.2014
(51) Int. Cl.: G06F 3/048, G06F 3/0485

(54) **DISPLAY CONTROL DEVICE, CONTROL METHOD THEREOF, AND PROGRAM**

(30) Priority: 27.05.2013 JP 2013111384
(71) Applicant: NEC CORPORATION, Tokyo 108-8001 (JP)
(72) Inventor: SUZUKI Katsumi, Kawasaki-shi, Kanagawa 2118666 (JP)
(74) Representative: Vossius & Partner Patentanwälte Rechtsanwälte mbB
(86) International application number: PCT/JP2014/062707
(87) International publication number: WO 2014/192535

(57) **Abstract**

A display control device (100) includes an operation reception unit (102) that receives a predetermined operation (130) with respect to a display content (122) which is displayed within a display frame in a display unit, and a display control unit (104) that obtains a position of the predetermined operation (130) received by the operation reception unit (102) and transforms an entirety of the display content (122) displayed within the display frame by a transformation method and a transformation amount which are determined for each portion of the display content (122) in accordance with a positional relationship between positions of position of predetermined operation (130) relative to position of the display content (122) within the display frame.

## Description

### TECHNICAL FIELD

The present invention relates to a display control device, a control method thereof, and a program.

### BACKGROUND ART

Patent Document 1 discloses a portable information terminal apparatus that displays information such as text data or image data on a display unit and displays information using scroll display according to an operation performed on the display unit using a touch panel or the like.

In addition, Patent Document 2 discloses an information processing apparatus that, in a case where a movement operation is performed at the stage when an end of a target to be displayed has already reached an end of a display region, transforms and displays items which are present in a range from the end of the target to be displayed to a position of an operating body. For example, the items which are present in a range from the end of the target to be displayed to the position of the operating body are extended in the respective moving directions. According to the information processing apparatus disclosed in Patent Document 2, at the stage when an operation of moving a display target is performed, it is possible to ascertain how much more the display target can be moved.

In addition, Patent Document 3 discloses a display control device that moves a plurality of selection objects, of which at least a portion is displayed in a display region, relative to the display region based on an output signal from an input device, and transforms and displays at least one of the plurality of selection objects displayed in the display region when the moved selection objects reach a predetermined position in the display region.

### RELATED DOCUMENT

### PATENT DOCUMENT

[Patent Document 1] Japanese Unexamined Patent Application Publication No. 2003-330613
[Patent Document 2] Japanese Unexamined Patent Application Publication No. 2012-083878
[Patent Document 3] Japanese Unexamined Patent Application Publication No. 2012-063862

### SUMMARY OF THE INVENTION

### PROBLEMS TO BE SOLVED BY THE INVENTION

However, in the technique of the above-mentioned patent document, at the stage when an operation of moving the display target is performed, for example, in a case where an operation of further scrolling a display target downward after an upper end of the display target reaches an upper end of a display frame, the items that are present in a range from the upper end of the display target to the position (above the position of the operating body) of the operating body (finger or the like) and the plurality of selection objects are extended. However, there has not been an idea of transforming the entire display content within the display region, further including a range from the position of the operating body to a lower end of the display region which is located below the position of the operating body.

The present invention is contrived in view of such situations, and an object thereof is to provide a display control device that expresses an action, performed on a display content according to an operation, by a visual effect on the entire display content to thereby improve an operational feeling for the display content and a visual recognition effect of the action of the operation, a control method of the display control device, and a program.

### MEANS FOR SOLVING THE PROBLEMS

According to an aspect of the invention, there is provided a display control device including: an operation reception unit that receives a predetermined operation with respect to a display content which is displayed within a display frame in a display unit; and a display control unit that obtains a position of the predetermined operation received by the operation reception unit, and transforms an entirety of the display content to be displayed within the display frame by a transformation method and a transformation amount which are determined for each portion of the display content in accordance with a positional relationship between positions of position of predetermined operation relative to position of the display content within the display frame.

According to another aspect of the invention, there is provided a control method of a display control device, the control method including: causing the display control device to receive a predetermined operation with respect to a display content which is displayed within a display frame in a display unit, obtain a position of the received predetermined operation, and transform an entirety of the display content displayed within the display frame by a transformation method and a transformation amount which are determined for each portion of the display content in accordance with a positional relationship between positions of position of predetermined operation relative to position of the display content within the display frame.

According to still another aspect of the invention, there is provided a program causing a computer to execute: a procedure of receiving a predetermined operation with respect to a display content which is displayed within a display frame in a display unit; a procedure of obtaining a position of the received predetermined operation; and a procedure of transforming an entirety of the display content displayed within the display frame by a transformation method and a transformation amount which are determined for each portion of the display content in accordance with a positional relationship between positions of position of predetermined operation relative to position of the display content within the display frame.

Meanwhile, note that those obtained by converting any combination of the foregoing components and the representation of the present invention between a method, a device, a system, a recording medium, a computer program, and the like are also effective as aspects of the present invention.

In addition, various types of components of the present invention are not necessarily required to be present individually and independently, but a plurality of components may be formed as one member, one component may be formed by a plurality of members, a certain component may be a portion of another component, a portion of a certain component and a portion of another component may overlap each other, or the like.

In addition, a plurality of procedures are described in order in the method and the computer program of the present invention, but the order of the description is not intended to limit the order of the execution of the plurality of procedures. Therefore, when the method and the computer program of the present invention are executed, the order of the plurality of procedures may be changed within the range of not causing any problem in terms of the contents.

Further, the plurality of procedures of the method and the computer program of the present invention are not limited to be individually executed at timings different from each other. Therefore, another procedure may occur during the execution of a certain procedure, the execution timing of a certain procedure and a portion or all of the execution timings of another procedure may overlap each other, or the like.

### EFFECTS OF THE INVENTION

According to the present invention, provided are a display control device that improves an operational feeling for a display content and a visual recognition effect of an action of an operation, a control method of the display control device, and a program.

### BRIEF DESCRIPTION OF THE DRAWINGS

The above-mentioned objects, other objects, features and advantages will be made clearer from the preferred exemplary embodiments described below, and the following accompanying drawings.

FIG. 1 is a functional block diagram illustrating a configuration of a display control device according to an exemplary embodiment of the present invention.
FIG. 2 is a flow chart illustrating an example of an operation of the display control device according to the exemplary embodiment of the present invention.
FIGS. 3 are diagrams illustrating an operation of the display control device according to the exemplary embodiment of the present invention.
FIG. 4 is a functional block diagram illustrating a configuration of the display control device according to the exemplary embodiment of the present invention.
FIG. 5 is a block diagram illustrating a configuration of a smartphone that realizes the display control device according to the exemplary embodiment of the present invention.
FIG. 6 is a flow chart illustrating an example of an operation of the display control device according to the exemplary embodiment of the present invention.
FIGS. 7 are diagrams illustrating an operation of the display control device according to the exemplary embodiment of the present invention.
FIG. 8 is a flow chart illustrating an example of an operation of the display control device according to the exemplary embodiment of the present invention.
FIGS. 9 are diagrams illustrating an operation of the display control device according to the exemplary embodiment of the present invention.
FIG. 10 is a flow chart illustrating an example of an operation of the display control device according to the exemplary embodiment of the present invention.
FIGS. 11 are diagrams illustrating an operation of the display control device according to the exemplary embodiment of the present invention.
FIGS. 12 are diagrams illustrating an operation of the display control device according to the exemplary embodiment of the present invention.
FIGS. 13 are diagrams illustrating an operation of the display control device according to the exemplary embodiment of the present invention.
FIGS. 14 are diagrams illustrating an operation of the display control device according to the exemplary embodiment of the present invention.

### DESCRIPTION OF EXEMPLARY EMBODIMENTS

Hereinafter, exemplary embodiments of the invention will be described with reference to the accompanying drawings. In all the drawings, similar elements are referenced by similar reference numerals and descriptions thereof will not be repeated.

### (First Exemplary Embodiment)

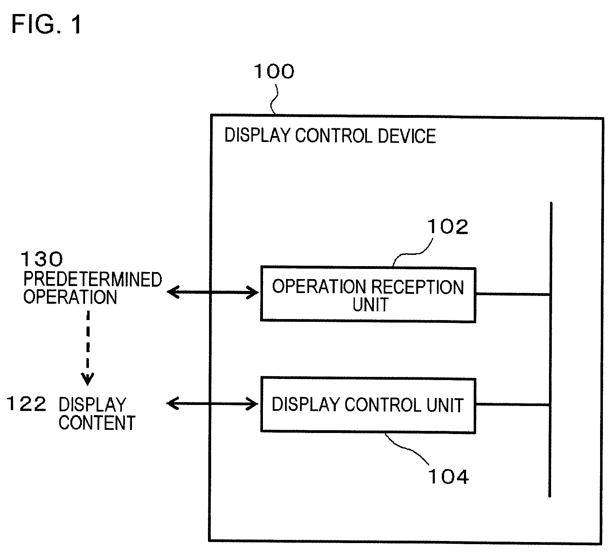

FIG. 1 is a functional block diagram illustrating a configuration of a display control device 100 according to an exemplary embodiment of the present invention.

The display control device 100 according to the exemplary embodiment of the present invention includes an operation reception unit 102 that receives a predetermined operation 130 with respect to a display content 122 displayed within a display frame in a display unit (not shown), and a display control unit 104 that obtains a position of the predetermined operation 130 received by the operation reception unit 102 and transforms the entire display content 122 displayed within the display frame by a transformation method and a transformation amount which are determined for each portion of the display content 122 in accordance with a positional relationship between positions of position of predetermined operation 130 relative to the position of the display content 122 within the display frame.

In the present invention, the term "display frame" means a boundary indicating the entire screen of a display unit serving as a display control target and a region such as at least one window displayed on the screen of the display unit. The term "within a display frame" means at least any one of a display range of the entire screen of the display unit and a range within each window displayed on the display unit. Meanwhile, the shape of the display frame is not limited to a rectangular shape, and may be any of various shapes. In addition, a boundary line constituting the display frame may be a straight line or a curved line.

In addition, a content (hereinafter, referred to as a display content 122) of at least a partial region (hereinafter, referred to as a display region) of a display target are displayed within the display frame. It is possible to change the display content 122 by moving the display region displayed within the display frame (within the entire screen or within a window) in accordance with the predetermined operation 130 such as a swiping, flicking, or dragging operation with respect to the display content 122 displayed on the display unit.

In the present invention, the display target includes general objects, such as displays of various types of tools and applications such as a web page, a text file, a document file, a spread sheet file, an image, a video, and a telephone directory, of which at least a portion is movably displayed in accordance with the predetermined operation 130 within the display frame of the screen of the display unit.

The above-mentioned constituent elements of the display control device 100 are realized by any combination of hardware and software of any computer (not shown) including a central processing unit (CPU), a memory, a program for implementing the constituent elements of FIG. 1 which are loaded into the memory, and interfaces for network connection. It will be understood to those skilled in the art that there are various modified examples in the realization method thereof and the devices. FIG. 1 shows a block of a functional unit rather than the configuration of a hardware unit.

In the display control device 100 of the present exemplary embodiment, various types of processing operations corresponding to a computer program according to the exemplary embodiment of the present invention are executed by a computer, and thus various types of units as mentioned above are realized as various types of functions.

The display control device of the present invention may be applied to any information display device such as a smartphone, a mobile phone, a personal digital assistant (PDA), a tablet terminal, a personal computer, a game machine, an acoustic device, or a video device which includes the above-mentioned computer. Meanwhile, the information display device and the display unit may not be integrally formed, and may be connected to the display control device to be controlled thereby.

In addition, the display control device of the present invention may be realized as one chip or device, or may be realized in a manner of being mounted on another device.

The computer program of the present exemplary embodiment is described as causing a computer for realizing the display control device 100 to execute a procedure of receiving the predetermined operation 130 with respect to the display content 122 displayed within the display frame 120 in the display unit, a procedure of obtaining a position of the received predetermined operation 130, and a procedure of transforming the entire display content 122 displayed within the display frame 120 by a transformation method and a transformation amount which are determined for each portion of the display content 122 in accordance with a positional relationship between positions of position of predetermined operation 130 relative to the position of the display content 122 within the display frame 120.

The computer program of the present invention may be recorded in a computer readable recording medium. The recording medium is considered to have various forms without being particularly limited. In addition, the program may be loaded from the recording medium into a memory of a computer, and may be downloaded in a computer through a network and loaded into a memory.

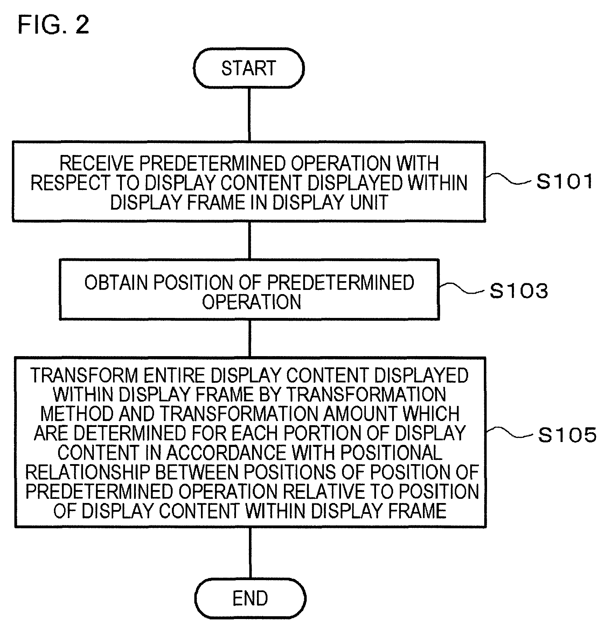

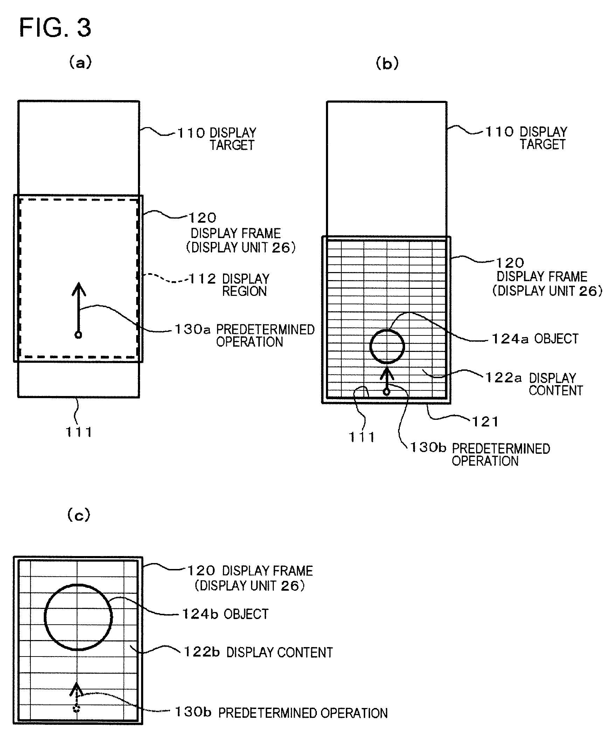

In the above-described configuration, a control method using the display control device 100 according to the exemplary embodiment of the present invention will be described below. FIG. 2 is a flow chart illustrating an example of an operation of the display control device 100 according to the exemplary embodiment of the present invention. FIGS. 3 are diagrams illustrating an operation of the display control device 100 according to the exemplary embodiment of the present invention.

The control method of the display control device 100 according to the exemplary embodiment of the present invention includes causing the display control device 100 to receive the predetermined operation 130 with respect to the display content 122 displayed within the display frame 120 in the display unit 26 (step S101), to obtain a position of the received predetermined operation 130 (step S103), and to transform the entire display content 122 displayed within the display frame 120 by a transformation method and a transformation amount which are determined for each portion of the display content 122 in accordance with a positional relationship between positions of position of predetermined operation 130 relative to the position of the display content 122 within the display frame 120 (step S105).

In detail, first, at least a portion of the display region 112 of the display target is displayed within the display frame 120 in the display unit 26. In step S101, the operation reception unit 102 receives the predetermined operation 130 with respect to the display content 122 displayed within the display frame 120 in the display unit 26.

In step S103, the display control unit 104 obtains a position of the predetermined operation 130 received by the operation reception unit 102.

In step S105, the display control unit 104 transforms the entire display content 122 displayed within the display frame 120 by a transformation method and a transformation amount which are determined for each portion of the display content 122 in accordance with a positional relationship between positions of position of predetermined operation 130 relative to the position of the display content 122 within the display frame 120.

As illustrated in FIG. 3(a), when the operation reception unit 102 receives a predetermined operation 130a for moving a display target 110 upward (at this time, the display region 112 moves downward) in order to browse a portion other than the display frame 120 located below the display target 110, the display control unit 104 scrolls the display target 110 upward within the display frame 120 based on the predetermined operation 130a to move the display region 112 of the display target 110 downward. As a result of the scrolling, it is assumed that one end (herein, a lower end) 111 of the display target 110 reaches one end 121 of the display frame 120. In other words, it is assumed that one end (herein, a lower end) of the display region 112 reaches the one end 111 of the display target 110.

At this time, as illustrated in FIG. 3(b), it is assumed that a display content 122a including an object 124a is displayed within the display frame 120. When the operation reception unit 102 further receives a predetermined operation 130b (operation of scrolling the display target 110 upward) with respect to the display content 122a, the display control unit 104 obtains a position of the predetermined operation 130b from the operation reception unit 102. In addition, the display control unit 104 transforms the entire display content 122a displayed within the display frame 120 by a transformation method and a transformation amount which are determined for each portion of the display content 122a in accordance with a positional relationship between positions of position of predetermined operation 130b relative to the position of the display content 122a within the display frame 120. As illustrated in FIG. 3(c), a display content 122b, transformed by the determined transformation method and transformation amount, which includes an object 124b transformed by the determined transformation method and transformation amount are displayed within the display frame 120.

Meanwhile, in FIGS. 3(b) and 3(c), a lattice constituted by a plurality of lines which is shown in the display content 122a and the display content 122b is an auxiliary line for indicating a size ratio of each display content. This example shows that the display content 122a of FIG. 3(b) is uniformly extended in accordance with the predetermined operation 130b at an equal magnification in horizontal and vertical directions to become the display content 122b of FIG. 3(c).

In the present exemplary embodiment, a description is given of an example in which a transformation method and a transformation amount are determined so that extension is uniformly performed at an equal magnification in horizontal and vertical directions, but the present invention is not limited thereto. Other examples will be described in detail in exemplary embodiments to be described later.

As described above, according to the display control device 100 of the exemplary embodiment of the present invention, an action performed on a display content by an operation is expressed by a visual effect on the entire display content, and thus it is possible to improve an operational feeling for the display content and a visual recognition effect of the action of the operation.

For example, in a situation where a display cannot be moved any further in spite of receiving a movement operation, there is the possibility of a user considering that a device is not responding due to a breakdown or an erroneous operation when there is no change in the display. However, in the display control device 100 of the present exemplary embodiment, a display content changes due to transformation and display according to an operation, and thus the user can understand that the lack of response of the device is not due to a breakdown or an erroneous operation. In addition, by providing the user with a feeling of as if a display content is an object formed of a material that expands and contracts, and the object is expanding and contracting, it is possible to intuitively notify the user that the display content cannot be moved any further by an operation.

### (Second Exemplary Embodiment)

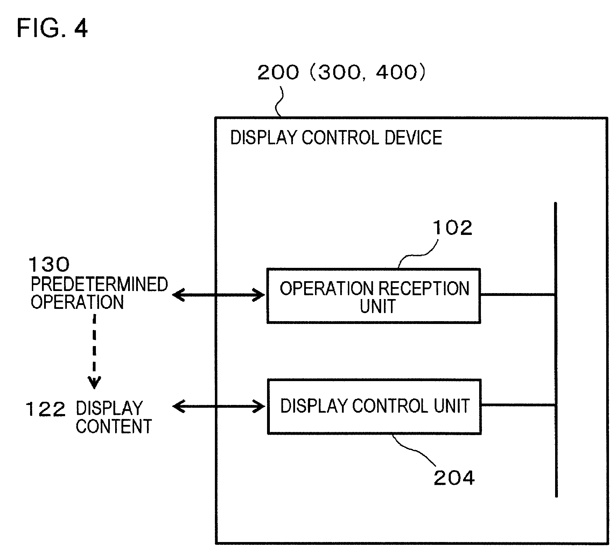

FIG. 4 is a functional block diagram illustrating a configuration of a display control device 200 according to an exemplary embodiment of the present invention.

Hereinafter, a description will be given of an exemplary embodiment in which a display control device of the present invention is realized by a smartphone 10.

The display control device 200 according to the exemplary embodiment of the present invention is different from the display control device 100 of the above-described exemplary embodiment in that the entire display content is transformed by fixing an end of the display content within a display frame. In particular, in the present exemplary embodiment, the display content is uniformly transformed by a transformation amount which is determined at a transformation ratio according to an operation amount of a predetermined operation. The display control device 200 of the present exemplary embodiment includes an operation reception unit 102 which is the same as that in the above-described exemplary embodiment of FIG. 1, and further includes a display control unit 204.

The display control device 200 according to the exemplary embodiment of the present invention includes the operation reception unit 102 that receives a predetermined operation 130 with respect to a display content 122 displayed within a display frame, and a display control unit 204 that obtains a position of the predetermined operation 130 received by the operation reception unit 102 and transforms the entire display content 122 displayed within a display frame by a transformation method and a transformation amount which are determined for each portion of the display content 122 in accordance with a positional relationship between positions of position of predetermined operation 130 relative to the position display content 122. The display control unit 204 transforms the entire display content 122 in a state where at least one end of the display content 122 is fixed.

In addition, in the display control device 200 according to the exemplary embodiment of the present invention, the operation reception unit 102 further detects the termination of the received predetermined operation 130, and the process of the display control unit 204 returns the display content 122 within a display frame 120 from a transformation display state to a pre-transformation display state when the termination of the predetermined operation 130 is detected by the operation reception unit 102.

The predetermined operation 130 with respect to the display content 122 is performed by an operating body such as a finger, a hand, a touch pen, a mouse, or a key, but an operation using the operating body may be either touching (in contact) or in proximity (in non-contact) to an operation surface. In addition, the predetermined operation 130 includes an operation using an operating body with respect to an operation surface such as, for example, dragging, flicking, swiping, or tapping, and an operation using such as a mouse based on a mouse pointer with respect to an icon, a menu, a button, a scroll bar, or the like.

In addition, the term "termination of the predetermined operation 130" means the termination of one operation performed on the display content 122 by an operation such as, for example, dragging, flicking, or swiping. The display control unit 204 maintains a state of the transformation display of the display content 122 within the display frame 120 while the predetermined operation 130 is continued, and returns the display content from a transformation display state to a pre-transformation display state when the termination of the predetermined operation 130 is detected.

In the present exemplary embodiment, a description will be given of an example in which an operation using a user's finger or the like with respect to a touch panel screen is performed as the predetermined operation 130 with respect to a display unit, but the present invention is not limited thereto. As described below, the present invention may be applied to various operations with respect to a display unit, and a method of detecting the termination of the predetermined operation 130 is different for each operation.
(a) In a case of a touch panel operation, a point in time when an operating body such as a finger or a touch pen is released from a screen of a display unit is detected as the termination of the predetermined operation 130. Alternatively, the termination of the predetermined operation may be detected by detecting another operation, such as tapping, which is determined in advance.
(b) In a case of a non-contact panel operation, a point in time when the termination of an operation is sensed based on change between a distance from an operating body to a screen of a display unit or change in a movement amount of the operating body, and the like is detected as the termination of the predetermined operation 130.
(c) In a case of an operation using a mouse pointer based on an operation of a mouse or a keyboard, a point in time when the pressing-down of a button or a key is released or a point in time when an operation of releasing a maintained key operation is sensed is detected as the termination of the predetermined operation 130.

In addition, in the display control device 200 according to the exemplary embodiment of the present invention, the display control unit 204 obtains an operation amount of the predetermined operation 130 received by the operation reception unit 102, and moves a display region 112 of a display target 110 displayed within the display frame 120 according to the obtained operation amount of the predetermined operation 130, thereby changing the display content 122.

Here, the display frame 120 is the entire screen, a window, or the like of any terminal or information device which is capable of realizing the display control device 200 according to the present exemplary embodiment, such as, for example, a smartphone, a mobile phone, a personal computer, or a game machine.

In addition, in this specification, the display target 110 is defined as a target, of which at least a portion is displayed within a display frame 120 of a screen of a display unit 26 and which is movably displayed in accordance with a predetermined operation 130 within the display frame 120, such as contents or information which are displayed on a screen of various types of tools or applications, such as a web page, a text file, a document file, a spread sheet file, an image, and a telephone directory. The term "movement" used herein includes a simple movement of an object displayed, other than the scrolling of the display target 110 within the display frame 120.

The term "object" used herein means an object which is present in the display target 110, or an object which is the display target 110 itself and is movable by the predetermined operation 130. For example, the object may be a window itself within a display screen, and may also include an icon, a tool bar, a predetermined region of an image, an object which is created by an application so as to be movable, and the like.

The operation amount of the predetermined operation 130 includes information regarding the position of the predetermined operation 130 according to the above-described exemplary embodiment, and may be indicated by the position of the predetermined operation 130 at every elapsed time of a series of operations. Further, the operation amount of the predetermined operation 130 may be indicated by at least any one of a direction, change in a direction, distance, speed, acceleration, time, and vector amount of an operation with respect to the display content 122. Alternatively, when the predetermined operation 130 is an operation with respect to the display content 122 using a hard or soft key, at least one piece of information of a time, depth, strength, direction, and intervals between repeated key presses may be included in the operation amount.

In addition, in the display control device 200 according to the exemplary embodiment of the present invention, the display control unit 204 obtains an operation amount of the predetermined operation 130 obtained by the operation reception unit 102, and uniformly transforms the display content 122 by a transformation amount which is obtained in accordance with a transformation ratio corresponding to the obtained operation amount of the predetermined operation 130.

The display region 112 is defined as a region which is displayed within the display frame 120, in the display target 110.

The display content 122 is a content out of the display target 110 that is displayed in the display region 112 within the display frame 120. Here, when a web page is described as an example, it is assumed that the display content 122 includes all, out of the display target 110, that is displayed within the display frame 120 such as an image, text, a link, an icon, a menu, and a user interface and further includes the arrangement and display modes thereof.

Similarly to the display control unit 104 of the above-described exemplary embodiment, the display control unit 204 may obtain a position of the predetermined operation 130 with respect to the entirety or at least a portion of the display content 122 to thereby perform transformation by a transformation method and a transformation amount which are determined for each portion of the display content 122 in accordance with a positional relationship between positions of position of predetermined operation 130 relative to the position of the display content 122 in the display frame 120.

Further, in the present exemplary embodiment, the display control unit 204 determines a transformation amount using an operation amount of the predetermined operation 130 on the display content 122, as the positional relationship between positions of position of predetermined operation 130 relative to the position of the display content 122 in the display frame 120.

In the present exemplary embodiment, the display control unit 204 transforms the entire display content 122 in a state where at least one end of the display content 122 is fixed. The display content 122 is extended and displayed in accordance with the operation amount of the predetermined operation 130. As the operation amount increases, an extension ratio of the display content 122 becomes higher. For example, as a result of moving the display region 112 by scrolling the display target 110 when the display region 112 which is a portion of the display target 110 is displayed within the display frame 120, the scrolling is stopped when the display region 112 reaches a terminus of the display target 110, and the display content 122 is held in a state where the display region 112 reaches the terminus of the display target 110. Such a state may be assumed to be a state where at least one end of the display content 122 is fixed. Alternatively, even when the display content 122 accounts for the entirety of the display target 110 (when scrolling is not performed), at least one end of the display content 122 may be assumed as being in a fixed state.

In addition, in the present exemplary embodiment, a description is given of a case where both the display frame 120 and the display target 110 have a rectangular shape and an end of each of the display frame 120 and the display target 110 is a straight line. However, when at least one of the display frame 120 and the display target 110 is a curved line, the display content 122 is set to be in a fixed state when at least a portion (or one location) of the end of the display target 110 reaches at least a portion (or one location) of the end of the display frame 120.

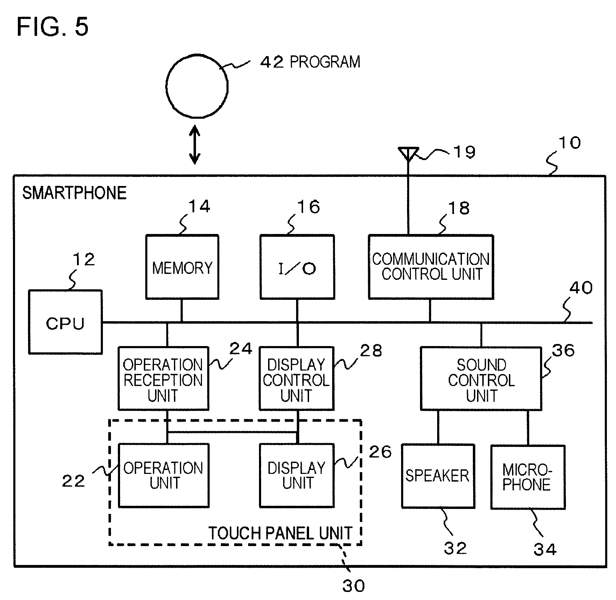

FIG. 5 is a block diagram illustrating a configuration of the smartphone 10 that realizes the display control device 200 according to the exemplary embodiment of the present invention.

Meanwhile, in the present exemplary embodiment, an example in which the display control device 200 is realized by the smartphone 10 is described, but the present invention is not limited thereto. The display control device 200 may also be applied to, for example, a mobile phone, a PDA, a tablet terminal, a personal computer, a game machine, an acoustic electronic device, a digital camera, an image display device, or other electronic devices, in addition to a smartphone.

As illustrated in FIG. 5, the smartphone 10 of the present exemplary embodiment includes a CPU 12, a memory 14, an input/output (I/O) 16, a communication control unit 18, an operation unit 22, an operation reception unit 24, a display unit 26, a display control unit 28, a speaker 32, a microphone 34, and a sound control unit 36.

The CPU 12 is connected to components of the smartphone 10 through a bus 40, and controls the whole smartphone 10 together with the components. The memory 14 has a region for storing a program for operating the smartphone 10 and user data including various types of setting data, application data, and the like which are used when the program is operated, and temporarily storing data such as a work region that is used when the program is operated. The I/O 16 controls inputs and outputs between the CPU 12 and the components of the smartphone 10 through the bus 40.

In the present exemplary embodiment, the smartphone 10 includes the communication control unit 18 that performs wireless LAN communication with another communication device capable of performing wireless local area network (LAN) communication (so-called wireless fidelity (Wi-Fi)) based on the IEEE802.11 series through an antenna 19, as a communication unit. Alternatively, the smartphone 10 may communicate with another communication device through a relay station (not shown).In addition, the smartphone 10 may include another communication unit.

The operation unit 22 includes operation keys, operation buttons, switches, a jog dial, a touch pad, a touch panel, and the like. The operation reception unit 24 receives an operation of the operation unit 22 by a user and notifies the CPU 12 of the operation. The display unit 26 includes a light emitting diode (LED) display, a liquid crystal display, an organic electroluminescence (EL) display, and the like. The display control unit 28 performs various screen displays on the display unit 26 in response to an instruction from the CPU 12.

In a case of the smartphone 10, at least a portion of the operation unit 22 and the display unit 26 integrally constitute a touch panel unit 30.

Examples of the touch panel unit 30 of the smartphone 10 include a touch panel, a touch pad, and the like. The operation reception unit 102 receives the predetermined operation 130 with respect to the display content 122 which is displayed within the display unit 26 (display frame 120) of the touch panel unit 30.

The sound control unit 36 controls the input and output of a sound to and from the speaker 32, the microphone 34, or an external acoustic device in response to an instruction from the CPU 12.

The above-mentioned constituent elements of the display control device 200 are realized by any combination of hardware and software of any computer (smartphone 10) including the CPU 12, the memory 14, a program 42 for implementing the constituent elements of FIG. 4 which are loaded into the memory 14, and interfaces for network connection (the I/O 16) in the smartphone 10. It will be understood to those skilled in the art that there are various modified examples in the realization method thereof and the devices. FIG. 4 illustrates a block of a functional unit rather than the configuration of a hardware unit.

The constituent elements of the display control device 200 of FIG. 4 may be realized by at least any one software such as an operating system that controls the smartphone 10 of the present exemplary embodiment, a driver, and an application executed by the smartphone 10, or may be realized by cooperation of hardware constituting the smartphone 10 and the software.

In the display control device 200 of the present exemplary embodiment, the CPU 12 of the smartphone 10 executes various types of processing operations corresponding to the computer program 42 according to the exemplary embodiment of the present invention, and thus various types of units as mentioned above are realized as various types of functions.

The computer program 42 according to the exemplary embodiment of the present invention is described as causing a computer (the CPU 12 of the smartphone 10) to further execute a procedure of transforming the entire display content 122 in a state where at least one end of the display content 122 is fixed, in addition to the procedures of the computer program in the above-described exemplary embodiment.

In addition, the computer program 42 according to the exemplary embodiment of the present invention is described as causing a computer (the CPU 12 of the smartphone 10) to further execute a procedure of obtaining an operation amount of the received predetermined operation 130 and a procedure of uniformly transforming the display content 122 by a transformation amount obtained in accordance with a transformation ratio depending on the obtained operation amount of the predetermined operation 130, in addition to the procedures of the computer program in the above-described exemplary embodiment.

In addition, the computer program 42 according to the exemplary embodiment of the present invention is described as causing a computer (the CPU 12 of the smartphone 10) to further execute a procedure of further detecting the termination of the received predetermined operation 130 and a procedure of returning the display content 122 within the display frame 120 from a transformation display state to a pre-transformation display state when the termination of the received predetermined operation 130 is detected, in addition to the procedures of the computer program in the above-described exemplary embodiment.

In addition, the computer program 42 according to the exemplary embodiment of the present invention is described as causing a computer (the CPU 12 of the smartphone 10) to further execute a procedure of obtaining an operation amount of the received predetermined operation 130 and a procedure of moving the display region 112 of the display target 110 displayed within the display frame 120 in accordance with the obtained operation amount of the predetermined operation 130 to change the display content 122, in addition to the procedures of the computer program in the above-described embodiment.

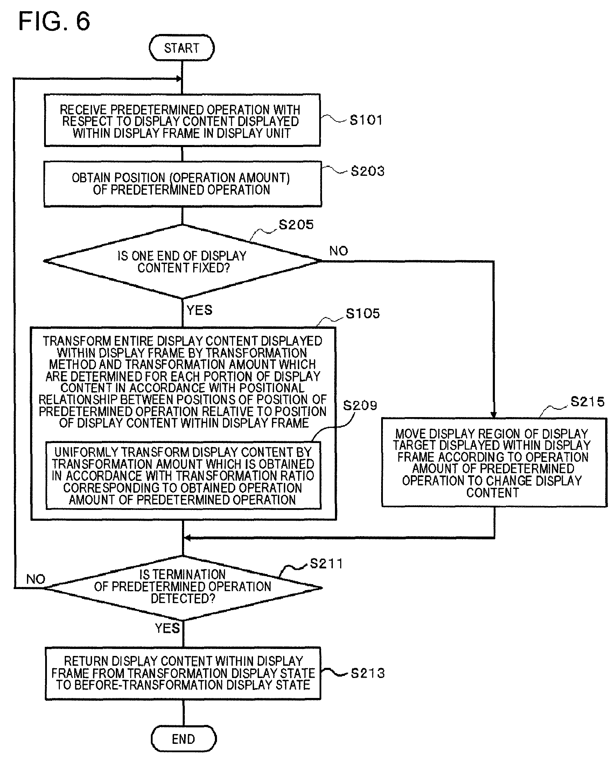

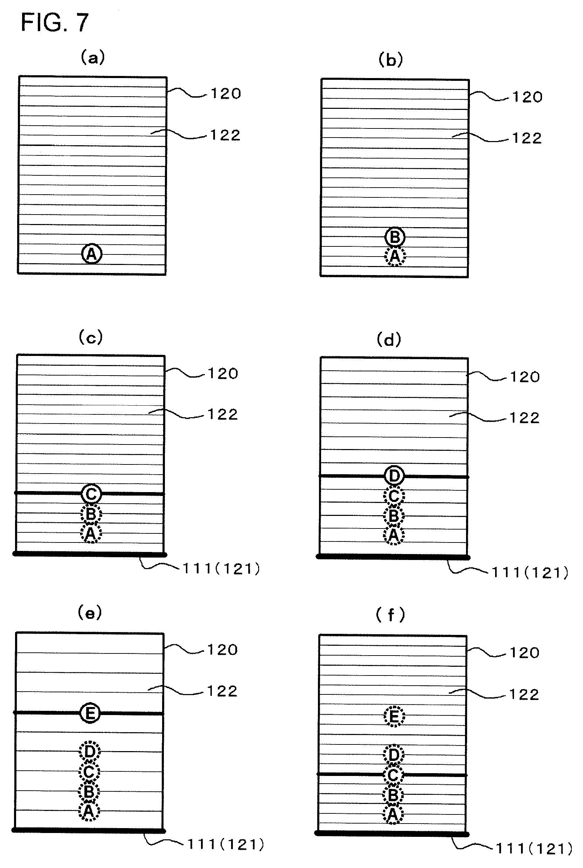

Next, a control method of the display control device 200 according to the present embodiment which is configured in this manner will be described. FIG. 6 is a flow chart illustrating an example of an operation of the display control device 200 according to the present exemplary embodiment. FIGS. 7 are diagrams illustrating an operation of the display control device 200 according to the present exemplary embodiment.

The control method of the display control device 200 according to the present exemplary embodiment includes step S101 and step S105 which are the same as those in the procedure of the control method of the above-described exemplary embodiment of FIG. 2, and further includes step S203 to step S213.

In the control method of the display control device 200 of the present exemplary embodiment, the display control device 200 receives the predetermined operation 130 with respect to the display content 122 displayed within the display frame 120 in the display unit 26 (step S101), obtains a position of the received predetermined operation 130 (step S203), transforms the entire display content 122 displayed within the display frame 120 by a transformation method and a transformation amount which are determined for each portion of the display content 122 in accordance with a positional relationship between positions of position of predetermined operation 130 relative to the position of the display content 122 within the display frame 120 (step S105), and transforms the entire display content 122 (step S105) in a state where at least one end of the display content 122 is fixed (YES in step S205).

In the control method of the display control device 200 of the present exemplary embodiment, the display control device 200 further obtains an operation amount of the received predetermined operation 130 (step S203), and uniformly transforms the display content 122 by a transformation amount which is obtained in accordance with a transformation ratio depending on the obtained operation amount of the predetermined operation 130 (step S209).

In step S209, when the transformation amount and the transformation method are determined in step S105, the transformation amount is obtained according to the transformation ratio based on the operation amount of the predetermined operation 130, and the transformation method is determined as a method of uniformly transforming the entire display content 122.

Further, in the control method of the display control device 200 of the present exemplary embodiment, the display control device 200 further detects the termination of the received predetermined operation 130 (step S211), and returns the display content 122 within the display frame 120 from a transformation display state to a pre-transformation display state (step S213) when the termination of the predetermined operation 130 is detected (YES in step S211).

Further, in the control method of the display control device 200 of the present exemplary embodiment, the display control device 200 obtains an operation amount of the received predetermined operation 130 (step S203), and moves the display region 112 of the display target 110 displayed within the display frame 120 according to the obtained operation amount of the predetermined operation 130 to change the display content 122 (step S215).

In detail, in step S101, the operation reception unit 102 receives the predetermined operation 130 with respect to the display content 122 displayed within the display frame 120 in the display unit 26.

In step S203, the display control unit 204 obtains a position (operation amount) of the predetermined operation 130.

It is assumed that the process of the flow chart in this drawing is started when the predetermined operation 130 is received by the operation reception unit 102. When a new predetermined operation 130 is received by the operation reception unit 102, the same process may be performed in parallel under predetermined conditions. In addition, for example, the display control unit 204 may divide the predetermined operation 130 received in step S101 into a series of operations at predetermined time intervals between a starting point and an end point of the predetermined operation and may repeatedly obtain individual positions (operation amounts) in step S203. It is assumed that processes from step S101 to step S211 are repeatedly performed at the predetermined time intervals. The processing procedures are examples, and the present invention is not limited thereto.

In each of the drawings of FIGS. 7, A, B, C, D, and E denote a touch position of the predetermined operation 130, in other words, a position of a finger within the display frame 120. The positions A, B, C, D, and E do not represent touching of a screen in a stepwise manner, but illustrate a series of operations such as, for example, dragging which starts at the position A and finishes at the position E, sectioned at each point in time, for the sake of convenience.

As illustrated in FIGS. 7(a) and 7(b), when a predetermined operation 130 such as, for example, dragging is performed from the position A to the position B within the display frame 120, the display target 110 is scrolled upward within the display frame 120 in accordance with the obtained position (operation amount) of the predetermined operation 130, and the display region 112 is moved below the display target 110.

In this example, the operation amount refers to a distance of the predetermined operation 130, for example, a distance between the position A and the position B.

When the predetermined operation 130 is further advanced from the position B to the position C, one end 111 of the display target 110 being scrolled upward reaches one end 121 of the display frame 120 as illustrated in FIG. 7 (c) . When there is an attempt to further advance the predetermined operation 130 in such a state, one end (one end 111 of the display target 110) of the display content 122 displayed within the display frame 120 is fixed to one end 121 of the display frame 120 by the display control unit 204.

When a state where one end of the display content 122 is fixed is set (YES in step S205), the display control unit 204 obtains a transformation amount for each portion of the display content 122 in accordance with a transformation ratio corresponding to the obtained operation amount (the position A to the position D, the position A to the position E, or the like) of the predetermined operation 130 to be used in step S105 (step S209). In this example, as the operation amount increases (as the distance becomes longer), the transformation ratio (herein, an extension ratio) also increases. The speed of the predetermined operation 130, the pressing-down pressure, or the like may be added to the operation amount, and the transformation ratio may be increased as the speed or pressure becomes higher.

Further, in this example, as the transformation method used in step S105, a method of applying the same transformation amount to the entire display content 122 to uniformly perform transformation is adopted (step S209). The display control unit 204 uniformly transforms the entire display content 122 displayed within the display frame 120 at the transformation ratio obtained in step S209 (step S105).

Specifically, when the dragging is continued from the position C illustrated in FIG. 7(c) to the position D illustrated in FIG. 7(d) and the position E illustrated in FIG. 7(e), the entire display content 122 is extended in a moving direction of a finger because one end of the display content 122 is fixed and scrolling is not performed.

In FIGS. 7, a plurality of horizontal lines shown within the display frame 120 are auxiliary lines for representing the scale of the display content 122, and represent that the display content 122 is extended more than the original display content 122 based on the one end 111 of the display target 110 as an interval between the horizontal lines becomes larger. FIG. 7(d) illustrates a state where the entire display content 122 is slightly more extended compared to that in FIG. 7 (c) in accordance with an operation amount from the position A to the position D. FIG. 7(e) illustrates a state where the entire display content 122 is extended more than that illustrated in FIG. 7(d) in accordance with an operation amount from the position A to the position E.

In the above-described exemplary embodiment, a description has been given of an example in which the display content 122 is transformed so as to be uniformly extended at an equal magnification in horizontal and vertical directions in accordance with an operation amount of the predetermined operation 130. However, in the present exemplary embodiment, it is assumed that the display content 122 is transformed so as to be uniformly extended at an equal magnification only in a vertical direction in the drawing and that a display magnification before transformation is maintained in a horizontal direction.

In addition, in this example, an operation of scrolling the display target 110 in a vertical direction of a screen has been described as the predetermined operation 130, but the operation direction is not limited thereto. The predetermined operation may include a scrolling operation or a movement operation in all of vertical, horizontal, and diagonal directions. For example, in a case of an operation in the horizontal direction, the display target 110 is scrolled within the display frame 120 in right and left directions in the drawing by the predetermined operation 130. At this time, when either of a right end and a left end of the display target 110 reaches either of a right end and a left end of the display frame 120 by scrolling, the display content 122 becomes fixed. Further, when the predetermined operation 130 is continued, the display control unit 204 may transform the display content 122 so as to be uniformly extended at an equal magnification in a horizontal direction in accordance with the operation amount of the predetermined operation 130 based on the fixed end.

In a case where the predetermined operation 130 of a user is finished, when the display control unit 204 detects the termination of the predetermined operation 130 (YES in step S211), the display content 122 within the display frame 120 is returned from a transformation display state (extension display in the vertical direction) illustrated in FIG. 7(e) to a pre-transformation display state illustrated in FIG. 7(f) (step S213). Meanwhile, the state of the display content 122 in FIG. 7(f) is the same as the state of the display content 122 in FIG. 7(c).

Thereafter, the display control device 200 terminates the process.

Meanwhile, in step S205, for example, when the one end 111 of the display target 110 does not yet reach the one end 121 of the display frame 120 by scrolling, one end of the display content 122 is not fixed (NO in step S205). In this case, the display control unit 204 moves the display region 112 of the display target 110 displayed within the display frame 120 in accordance with an operation amount of the predetermined operation 130 received by the operation reception unit 102 to change the display content 122 (step S215). Then, the process of the display control unit proceeds to step S211.

In addition, in step S211, when the predetermined operation 130 is continued (NO in step S211), the process of the display control unit returns to step S101 and repeats the process up to step S211. When one end of the display content 122 is fixed and the predetermined operation 130 is continued (YES in step S205, and NO in step S211), the entire display content 122 is extended more than those illustrated in FIGS. 7 (d) and 7 (e) in accordance with an operation amount of the predetermined operation 130.

Meanwhile, in the display control device 200 according to the present exemplary embodiment, a description has been given of a case where extension is performed in an operation direction by a transformation amount obtained in accordance with a transformation ratio based on an operation amount of the predetermined operation 130, but reduction may be performed by a transformation amount obtained using the same method. For example, as the operation amount increases, a reduction ratio may be increased. In this case, the display content 122 originally displayed in the display frame 120 and the display frame 120 may be displayed so as to be reduced in size. Alternatively, since the display content 122 is reduced, the range of the display region 112 of the corresponding display target 110 is extended toward a side opposite to a fixed end, and thus the display frame 120 may allow a content in a wide range to be displayed small while maintaining its original size.

In addition, when a case where an operation direction is a vertical direction is taken as an example, examples of a transformation method include a pattern which is extended in the vertical and horizontal directions, a pattern which is reduced in the vertical and horizontal directions, a pattern which is extended in the vertical direction and is reduced in the horizontal direction, a pattern which is reduced in the vertical direction and is extended in the horizontal direction, and the like, in addition to a pattern that is extended only in the vertical direction which is the operation direction and is not transformed in a horizontal direction perpendicular to the operation direction and a pattern which is reduced only in the vertical direction and is not transformed in the horizontal direction. These transformation methods may be appropriately selected depending on a terminal, an information device, or an application to which the method is to be applied. In addition, the direction of the transformation may be assumed to be the operation direction, or a predetermined direction with respect to the operation direction such as a direction perpendicular to the operation direction, or may be assumed to be a predetermined direction with respect to the display content 122, regardless of the operation direction.

In addition, the display region 112 is scrolled in accordance with an operation amount until one end 121 of the display frame 120 reaches at least one end 111 of the display target 110. However, when one end of the display frame is already at one end at the starting point of a predetermined operation, the display content 122 may be immediately extended or reduced without being scrolled. Further, similarly to a case where the display target 110 fits within the display frame 120, the display content 122 may be immediately extended or reduced without being scrolled.

In a case where the display target 110 includes a fixed portion such as a fixed header and only a portion other than the fixed portion in the display region 112 is scrolled in a state where the fixed portion is displayed within the display frame 120 at all times, when one end of the display content 122 is fixed, only the portion other than the fixed portion may be extended or reduced, or the fixed portion may also be uniformly extended or reduced.

In addition, in the present exemplary embodiment, a description has been given of a case where one end of the display target 110 is fixed to one end of the display frame 120 and the display content 122 is transformed based on the one end 121 (one end 111 of the display target 110) of the display frame 120, but transformation may be performed by providing a predetermined reference other than that of the one end 121 (the one end 111 of the display target 110) of the display frame 120 in accordance with the display content 122. For example, when the display target 110 includes a header region, which is not fixed, on one end side thereof, the display content 122 other than the header region may be transformed based on a boundary between the display content and the header region after one end of the display target 110 including the header region reaches one end of the display frame 120. That is, only the region of the display content 122 other than the header region may be transformed in a state where the header region is not transformed and is fixed within the display frame 120. In this manner, in the present exemplary embodiment, the display control unit 204 may determine a transformation method and a transformation amount for each portion of the display content in accordance with a positional relationship between positions of position of predetermined operation relative to the position of the display content within the display frame.

In addition, in step S205, a description has been given of an example in which scrolling is continued until one end of the display target 110 reaches one end of the display frame 120 and the one ends are fixed to each other at a point in time when one end of the display target 110 reaches one end of the display frame 120. However, one end of the display target 110 and one end of the display frame 120 are only required to be in a predetermined positional relationship, and the one ends may not exactly match with each other.

In addition, a description has been given of an example in which one side of the display frame 120 is assumed to be one end 121 and one end of the display frame 120 and one end of the display target 110 are fixed to each other. However, as another example, for example, at least one point of the display content 122 is fixed like pinning, and transformation may be performed with the point as a basing point.

In step S213, after the termination of the predetermined operation 130 is detected, return from a transformation display state to a pre-transformation display state may be instantly performed, or may be gradually performed.

Meanwhile, it has been described that the display unit 26 is included in the smartphone 10 that realizes the display control device 200 according to the exemplary embodiment of the present invention. However, the present invention is not limited thereto, and the display unit may be included in any display device such as an external display device.

As described above, according to the display control device 200 of the exemplary embodiment of the present invention, the same effects as those in the above-described exemplary embodiment are exhibited, and a display object is displayed so as to be extended in a state where a display position of one end of a display content is fixed. Accordingly, the display object is, as it were, an object formed of a material that expands and contracts, suggesting to a user that the object is extended in a state where an end of the object is fastened by a fastener, and thus it is possible to intuitively notify the user that the display content could not be moved any further by an operation.

In addition, since the display content returns to its original state upon detection of the termination of a predetermined operation, no further operation is performed on the object appearing to be formed of a material that expands and contracts. Accordingly, a user is suggested that the object having expanded and contracted was returned to its original state, and thus it is possible to intuitively notify the user that the display content could not be moved any further by an operation. In addition, the display is performed at the original magnification before transformation, and thus the user can easily confirm the display content.

### (Third Exemplary Embodiment)

A display control device 300 according to an exemplary embodiment of the present invention is different from the display control device according to the above-described exemplary embodiment in that a display content is transformed by a transformation method and a transformation amount which are different depending on the position of the display content in a state where the display content is fixed at one end thereof. The display control device 300 according to the exemplary embodiment of the present invention includes the operation reception unit 102 and the display control unit 204 which are the same as those of the display control device 200 of the above-described exemplary embodiment of FIG. 4. Hereinafter, a description will be given with reference to FIG. 4. The display control device 300 of the present exemplary embodiment may include a combination of at least some components of the display control device of the above-described exemplary embodiment in a range without any inconsistency.

The display control device 300 according to the exemplary embodiment of the present invention has the same configuration as that in the above-described exemplary embodiment. Further, the display control unit 204 obtains an operation amount of a predetermined operation 130 received by an operation reception unit 102, and transforms, in a state where at least one end of the display content 122 is fixed, each portion of a display content 122 by a transformation amount which is determined in accordance with a transformation ratio corresponding to a distance between the one end of the display content and each portion of the display content in a direction other than the direction of the one end, the position of the predetermined operation 130, and the obtained operation amount thereof.

Also in the present exemplary embodiment, similarly to the above-described exemplary embodiment, the display control unit 204 transforms the entire display content 122 in a state where at least one end of the display content 122 is fixed. The display content 122 is displayed so as to be extended, in accordance with an operation amount of the predetermined operation 130. As the operation amount increases, an extension ratio of the display content 122 becomes higher. For example, when a display region 112 which is a portion of a display target 110 is displayed within a display frame 120, the display region 112 is moved by scrolling the display target 110. As a result, when the display region 112 reaches a terminus of the display target 110, the scrolling is stopped, and the display content 122 is maintained in a state where the display region 112 has reached the terminus of the display target 110. Such a state may be assumed to be a state where at least one end of the display content 122 is fixed. Alternatively, even when the display content 122 accounts for the entirety of the display target 110 (when scrolling is not performed), at least one end of the display content 122 may be assumed as being in a fixed state.

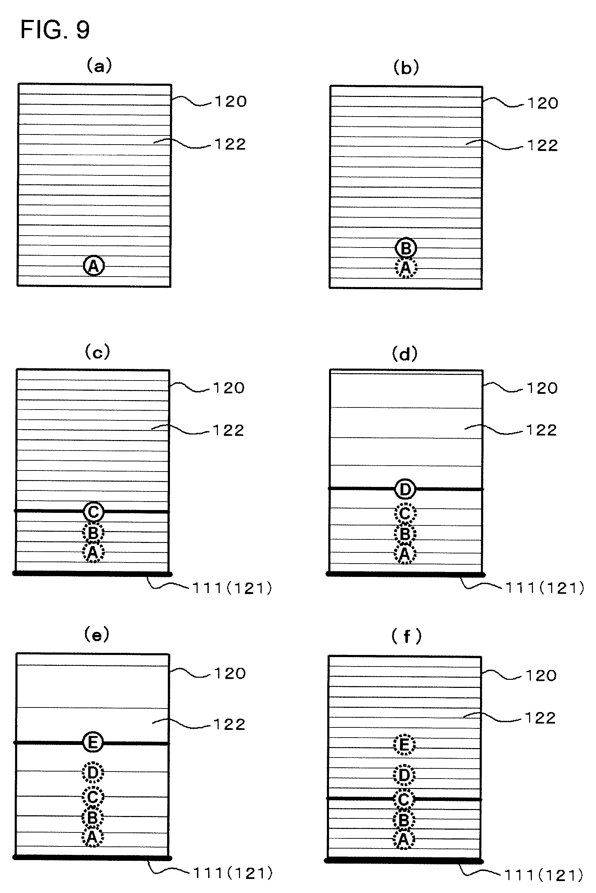

In each of the drawings of FIGS. 9, similarly to FIGS. 7, A, B, C, D, and E denote a touch position of the predetermined operation 130, in other words, a position of a finger within the display frame 120. The positions A, B, C, D, and E do not represent touching of a screen in a stepwise manner, but illustrate a series of operations such as, for example, dragging which starts at the position A and finishes at the position E, sectioned at each point in time for the sake of convenience.

In FIGS. 9, a plurality of horizontal lines shown within the display frame 120 are auxiliary lines for representing the scale of the display content 122. In the present exemplary embodiment, a description is given of an example in which the predetermined operation 130 is performed in a vertical direction in the drawing and the display content 122 is extended in the same direction as the predetermined operation 130. In addition, it is shown that the display content 122 is extended more than the original display content 122 as an interval between the horizontal lines within the display frame 120 in the drawing becomes larger.

Similarly to the above-described exemplary embodiment, the display control unit 204 transforms each portion of the display content 122 by a transformation amount which is obtained in accordance with a transformation ratio based on an operation amount of the obtained predetermined operation 130.

In the present exemplary embodiment, in the display control unit 204, in a state where at least one end of the display content 122 is fixed (state of FIG. 9(c)), the transformation amount is determined so that an extension ratio becomes higher as a distance between the fixed one end and each portion in a direction (for example, the other end side) other than the direction of the one end becomes larger. In other words, the transformation ratio is determined so that the extension ratio of the portion becomes higher as a distance from the fixed one end increases. The display content 122 is displayed so as to be transformed as illustrated in FIGS. 9(d) and 9(e) by the transformation amount, which is determined in this manner, by the display control unit 204.

In the present exemplary embodiment, it is assumed that the display content 122 is transformed so as to be uniformly extended at unequal magnifications only in a vertical direction of the drawing and that a display magnification before transformation is maintained in a horizontal direction. However, the present invention is not limited thereto.

In the display control device 300 of the present exemplary embodiment, a CPU 12 of a smartphone 10 executes various types of processing operations corresponding to a computer program 42, and thus various types of units as mentioned above are realized as various types of functions.

The computer program 42 according to the exemplary embodiment of the present invention is described as causing a computer (the CPU 12 of the smartphone 10) to further execute a procedure of obtaining an operation amount of the received predetermined operation 130, and a procedure of transforming, in a state where at least one end of the display content 122 is fixed, each portion of the display content 122 by a transformation amount which is determined in accordance with a transformation ratio depending on a distance between the one end and each portion of the display content in a direction other than that of the one end, the position of the predetermined operation 130, and the obtained operation amount thereof, in addition to the procedures of the computer program in the above-described exemplary embodiment.

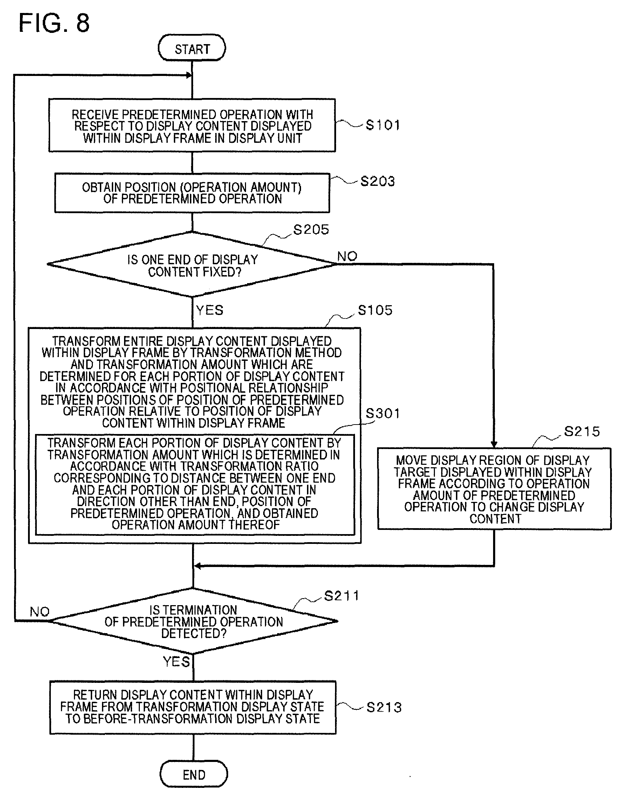

Next, a control method of the display control device 300 according to the present exemplary embodiment which is configured in this manner will be described. FIG. 8 is a flow chart illustrating an example of an operation of the display control device 300 according to the present exemplary embodiment.

In the control method of the display control device 300 of the present exemplary embodiment, the same control as that in the above-described exemplary embodiment is performed, and an operation amount of the received predetermined operation 130 is obtained. In a state where at least one end of the display content 122 is fixed, each portion of the display content 122 is transformed by a transformation amount which is determined in accordance with a transformation ratio depending on a distance between the one end and each portion of the display content in a direction other than that of the one end, the position of the predetermined operation 130, and the obtained operation amount thereof (step S301).

Specifically, in the flow chart of FIG. 8, the control method of the display control device 300 of the present exemplary embodiment includes processes of step S101 to step S213 which are the same as those in the flow chart of the above-described exemplary embodiment of FIG. 6. Further, step S105 includes a process of step S301 for determining a transformation method and a transformation ratio.

In detail, in step S101, the operation reception unit 102 receives the predetermined operation 130 with respect to the display content 122 displayed within the display frame 120 in the display unit 26.

In step S203, the display control unit 204 obtains a position (operation amount) of the predetermined operation 130.

Similarly to the above-described exemplary embodiment, it is assumed that the process of the flow chart of this drawing is started when the operation reception unit 102 receives the predetermined operation 130. When the operation reception unit 102 receives a new predetermined operation 130, the same process may be performed in parallel under predetermined conditions. Alternatively, the process of the flow chart of the above-described exemplary embodiment may be performed in parallel in a consistent range. In addition, for example, the display control unit 204 may divide the predetermined operation 130 received in step S101 into a series of operations at predetermined time intervals between a starting point and an end point thereof and repeatedly obtain individual positions and operation amounts in step S203. It is assumed that processes from step S101 to step S211 are repeatedly performed at the predetermined time intervals. The processing procedures are examples, and the present invention is not limited thereto.

As illustrated in FIGS. 9(a) and 9(b), when a predetermined operation 130 such as, for example, dragging is performed from the position A to the position B within the display frame 120, the display target 110 is scrolled upward within the display frame 120 in accordance with the obtained position (operation amount) of the predetermined operation 130, and the display region 112 is moved below the display target 110.

In this example, the operation amount refers to a distance of the predetermined operation 130, for example, a distance between the position A and the position B. As the operation amount increases (distance becomes longer), the transformation ratio (herein, an extension ratio) also increases. The speed of the predetermined operation 130, the pressure of pressing-down, or the like may be added to the operation amount, and the transformation ratio may be increased as the speed or pressure becomes higher.

When the predetermined operation 130 is further advanced from the position B to the position C, one end 111 of the display target 110 having been scrolled upward reaches one end 121 of the display frame 120 as illustrated in FIG. 9(c). When there is an attempt to further advance the predetermined operation 130 in such a state, one end (one end 111 of the display target 110) of the display content 122 displayed within the display frame 120 is fixed to one end 121 of the display frame 120 by the display control unit 204.

When a state where one end of the display content 122 is fixed is set (YES in step S205), the display control unit 204 obtains a transformation amount in accordance with a transformation ratio corresponding to a distance between the one end of the display content and each portion of the display content in a direction other than that of the one end and the obtained operation amount (the position A to the position D, the position A to the position E, or the like) of the predetermined operation 130 (step S301). Further, in this example, as the transformation method used in step S105, a transformation method of changing a transformation ratio in accordance with a distance between one end of the display content 122 and each portion of the display content in a direction other than that of the one end is adopted (step S301). The display control unit 204 transforms each portion of the display content 122 displayed within the display frame 120 in accordance with the transformation ratio obtained in step S301 (step S105).

Specifically, when the dragging is continued from the position C illustrated in FIG. 9(c) to the position D illustrated in FIG. 9(d) and the position E illustrated in FIG. 9(e), the entire display content 122 is extended in a moving direction of a finger because one end of the display content 122 is fixed and scrolling is not performed.

At this time, FIG. 9(d) illustrates a state where the display control unit 204 calculates a transformation ratio of each portion by multiplying an extension ratio, which is determined in accordance with an operation amount of the predetermined operation 130 from the position A to the position D, by a coefficient corresponding to, for example, a distance between one end of the display content 122 which is fixed and each portion of the display content in a direction other than that of the one end so that the extension ratio becomes higher as the distance becomes longer, thereby transforming each portion of the display content 122.

In addition, FIG. 9(e) illustrates a state where the display control unit 204 calculates a transformation ratio of each portion by multiplying an extension ratio, which is determined in accordance with an operation amount of the predetermined operation 130 from the position A to the position E, by a coefficient corresponding to, for example, a distance between one end of the display content 122 which is fixed and each portion of the display content in a direction other than that of the one end, thereby transforming each portion of the display content 122 as illustrated in FIG. 9(e).

Similarly to the above-described exemplary embodiment, according to the control method of the display control device 300 of the present exemplary embodiment, the transformation amount is determined in accordance with the operation amount of the predetermined operation 130. For example, as the operation amount of the predetermined operation 130 increases, the transformation amount of the display content 122 increases. Further, as a distance between a portion of the display content 122 and one end which is fixed increases, the transformation amount of the portion of the display content 122 increases.

In a case where the predetermined operation 130 of a user is finished, when the display control unit 204 detects the termination of the predetermined operation 130 (YES in step S211), the display content 122 within the display frame 120 is returned from a transformation display state illustrated in FIG. 9(e) to a pre-transformation display state illustrated in FIG. 9(f) (step S213). Meanwhile, the state of the display content 122 in FIG. 9(f) is the same as the state of the display content 122 in FIG. 9(c).

Thereafter, the display control device 300 terminates the process.

Meanwhile, in step S205, for example, when the one end 111 of the display target 110 does not yet reach the one end 121 of the display frame 120 by scrolling, one end of the display content 122 is not fixed (NO in step S205). In this case, the display control unit 204 moves the display region 112 of the display target 110 displayed within the display frame 120 in accordance with an operation amount of the predetermined operation 130 received by the operation reception unit 102 to change the display content 122 (step S215). Then, the process of the display control unit proceeds to step S211.

In addition, in step S211, when the predetermined operation 130 is continued (NO in step S211), the process of the display control unit returns to step S101 and repeats the process to step S211. When one end of the display content 122 is fixed and the predetermined operation 130 is continued (YES in step S205, and NO in step S211), each of the portions of the display content 122 is extended more than those illustrated in FIGS. 9(d) and 9(e) in accordance with an operation amount of the predetermined operation 130.

Meanwhile, in the exemplary embodiment of the present invention, a description has been given of an example in which an operation direction of the predetermined operation 130 is a vertical direction of the display frame 120 of each of the drawings of FIGS. 9, the display content 122 is fixed to a lower end of the display frame 120, and the display content 122 is transformed so as to be extended in a vertical direction of the predetermined operation 130, but the present invention is not limited thereto. Similarly to the above-described exemplary embodiment, the display content may be extended or reduced in a direction perpendicular (for example, a horizontal direction) to an operation direction (for example, a vertical direction) of the predetermined operation 130 or a predetermined direction. In addition, when one end which is fixed is one point, for example, the display content may be concentrically extended from the point centering on the point. Alternatively, the display content may be fixed at a plurality of points, may be concentrically extended centering on each point, and may be transformed in the form of a wave as a whole. Further, the display content may be extended or reduced in a predetermined direction with respect to the display content 122, regardless of the operation direction. Further, for example, the display content may be transformed so that a transformation amount of the display content 122 decreases (reduction ratio becomes higher) as a distance from one end of the display content 122 increases.

As described above, according to the display control device 300 of the exemplary embodiment of the present invention, the same effects as those in the above-described exemplary embodiment are exhibited.

### (Fourth Exemplary Embodiment)

A display control device 400 according to an exemplary embodiment of the present invention is different from the display control device of the above-described exemplary embodiment in that a display content is transformed by a transformation amount which is different for each range in a state where the display content is fixed at one end. The display control device 400 according to the exemplary embodiment of the present invention includes the operation reception unit 102 and the display control unit 204 which are the same as those of the display control device 200 in the above-described exemplary embodiment of FIG. 4. Hereinafter, a description will be given with reference to FIG. 4. The display control device 400 of the present exemplary embodiment may include a combination of at least some components of the display control device of the above-described exemplary embodiment in a range without any inconsistency.

The display control device 400 according to the exemplary embodiment of the present invention has the same configuration as that in the above-described exemplary embodiment. Further, in a state where at least one end of the display content is fixed, the display control unit 204 transforms a display content by different transformation methods or different transformation amounts between a first range and a second range, the first range existing between the fixed end and a position of a predetermined operation, and the second range existing between the other end opposite to the fixed end of the display content and the position of the predetermined operation.

In the display control device 400 according to the exemplary embodiment of the present invention, the display control unit 204 further extends the display content in the first range.

In the display control device 400 according to the exemplary embodiment of the present invention, the display control unit 204 reduces the display content in the second range.

In the display control device 400 of the present exemplary embodiment, a CPU 12 of a smartphone 10 executes various types of processing operations corresponding to a computer program 42, and thus various types of units as mentioned above are realized as various types of functions.

The computer program 42 according to the exemplary embodiment of the present invention is described as causing a computer (the CPU 12 of the smartphone 10) to further execute a procedure of transforming, in a state where at least one end of a display content is fixed, the display content by different transformation methods or different transformation amounts between a first range and a second range, the first range existing between the fixed end and a position of a predetermined operation and the second range existing between the other end opposite to the fixed end of the display content and the position of the predetermined operation, in addition to the procedures of the computer program in the above-described exemplary embodiment.

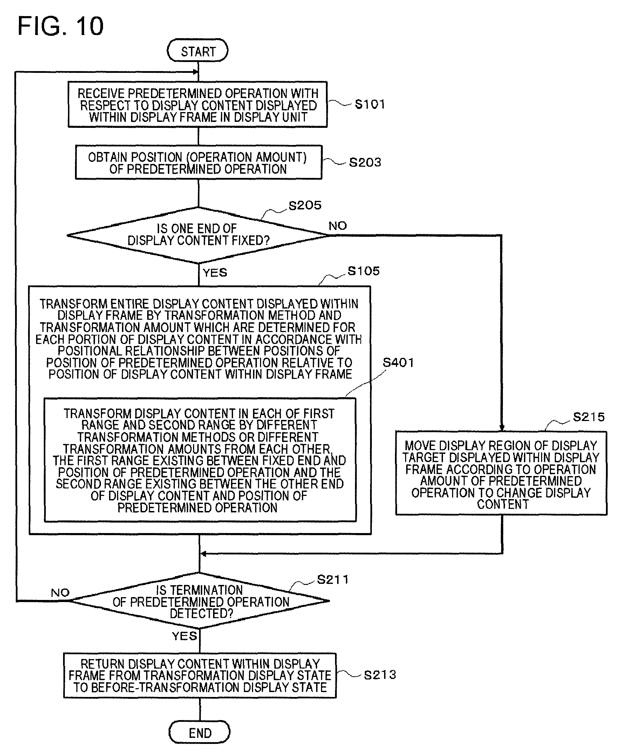

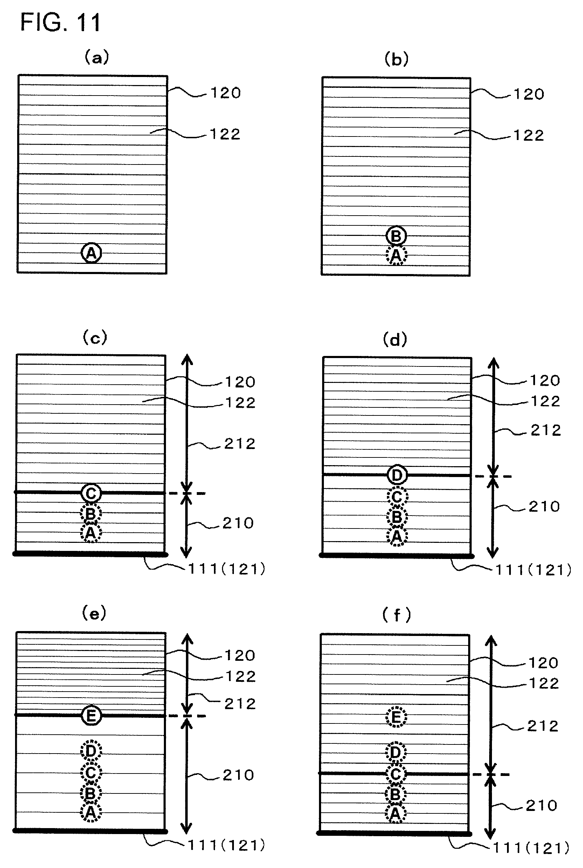

Next, a control method of the display control device 400 according to the present exemplary embodiment which is configured in this manner will be described. FIG. 10 is a flow chart illustrating an example of an operation of the display control device 400 according to the present exemplary embodiment. FIGS. 11 are diagrams illustrating an operation of the display control device 400 according to the present exemplary embodiment.

In the control method of the display control device 400 of the present exemplary embodiment, the same control as that in the above-described exemplary embodiment is performed, and the display control device 400 transforms, in a state where at least one end of the display content 122 is fixed, a display content by different transformation methods or different transformation amounts between a first range 210 and a second range 212, the first range 210 existing between the fixed end and a position of a predetermined operation 130 and the second range 212 existing between the other end opposite to the fixed end of the display content 122 and the position of the predetermined operation 130 (step S401).

For example, in the control method of the display control device 400 of the present exemplary embodiment, the display control device 400 further extends the display content in the first range.

For example, in the control method of the display control device 400 of the present embodiment, the display control device 400 further reduces the display content in the second range.

In detail, in step S101, the operation reception unit 102 receives the predetermined operation 130 with respect to the display content 122 displayed within the display frame 120 in the display unit 26.

In step S203, the display control unit 204 obtains a position (operation amount) of the predetermined operation 130.

It is assumed that the process of the flow chart in this drawing is started when the predetermined operation 130 is received by the operation reception unit 102. When a new predetermined operation 130 is received by the operation reception unit 102, the same process may be performed in parallel under predetermined conditions. In addition, for example, the display control unit 204 may divide the predetermined operation 130 received in step S101 into a series of operations at predetermined time intervals between a starting point and an end point of the predetermined operation and may repeatedly obtain individual positions and operation amounts in step S203. It is assumed that processes from step S101 to step S211 are repeatedly performed at the predetermined time intervals. The processing procedures are examples, and the present invention is not limited thereto.

In each of the drawings of FIGS. 11, A, B, C, D, and E denote a touch position of the predetermined operation 130, in other words, a position of a finger within the display frame 120. The positions A, B, C, D, and E do not represent touching of a screen in a stepwise manner, but illustrate that a series of operations such as, for example, dragging which starts at the position A and finishes at the position E, sectioned at each point in time for the sake of convenience.

As illustrated in FIGS. 11(a) and 11(b), when a predetermined operation 130 such as, for example, dragging is performed from the position A to the position B within the display frame 120, the display target 110 is scrolled upward within the display frame 120 in accordance with the obtained position (operation amount) of the predetermined operation 130, and the display region 112 is moved below the display target 110.

In this example, the operation amount refers to a distance of the predetermined operation 130, for example, a distance between the position A and the position B, and a transformation ratio (herein, an extension ratio) becomes higher as an operation amount increases (distance becomes longer). The speed of the predetermined operation 130, the pressure of pressing-down, or the like may be added to the operation amount, and the transformation ratio may be increased as the speed or pressure becomes higher.

When the predetermined operation 130 is further advanced from the position B to the position C, one end 111 of the display target 110 having been scrolled upward reaches one end 121 of the display frame 120 as illustrated in FIG. 11(c). When there is an attempt to further advance the predetermined operation 130 in such a state, one end (one end 111 of the display target 110) of the display content 122 displayed within the display frame 120 is fixed to one end 121 of the display frame 120 by the display control unit 204.

When a state where one end of the display content 122 is fixed is set (YES in step S205), the display control unit 204 determines different transformation methods or different transformation amounts between the first range 210 and the second range 212, the first range 210 existing between one end of the display content 122 which is fixed and the position D of the predetermined operation 130 and the second range 212 existing between the other end opposite to the fixed end of the display content 122 and the position D of the predetermined operation 130, as illustrated in FIG. 11(d) (step S401). In addition, the display control unit 204 transforms the first range 210 and the second range 212 by the determined transformation method and transformation amount (step S105).

Specifically, the first range 210 in the display content 122 is uniformly extended by a transformation amount according to an extension ratio which is obtained based on an operation amount from the position A to the position D of the predetermined operation 130, and the second range 212 in the display content 122 is uniformly reduced by a transformation amount according to reduction ratio which is obtained based on an operation amount from the position A to the position D of the predetermined operation 130.

As illustrated in FIG. 11(e), when the predetermined operation 130 is advanced to the position E, an extension ratio and a reduction ratio are obtained based on an operation amount from the position A to the position E, the first range 210 is extended at an extension ratio which is higher than that at a point in time when the predetermined operation 130 is set to be at the position D, and the second range 212 is reduced at a high reduction ratio.

In this manner, one of the first range 210 and the second range 212 is extended, and the other one is reduced. As a result, it is possible to maintain a display information amount of the display content 122.

In a case where the predetermined operation 130 of a user is finished, when the display control unit 204 detects the termination of the predetermined operation 130 (YES in step S211), the display content 122 within the display frame 120 is returned from a transformation display state illustrated in FIG. 11(e) to a pre-transformation display state illustrated in FIG. 11(f) (step S213). Meanwhile, the state of the display content 122 in FIG. 11(f) is the same as the state of the display content 122 in FIG. 11(c).

Thereafter, the display control device 400 terminates the process.

Meanwhile, in step S205, for example, when the one end 111 of the display target 110 does not yet reach the one end 121 of the display frame 120 by scrolling, one end of the display content 122 is not fixed (NO in step S205). In this case, the display control unit 204 moves the display region 112 of the display target 110 displayed within the display frame 120 in accordance with an operation amount of the predetermined operation 130 received by the operation reception unit 102 to change the display content 122 (step S215). Then, the process of the display control unit proceeds to step S211.

In addition, in step S211, when the predetermined operation 130 is continued (NO in step S211), the process of the display control unit returns to step S101 and repeats the process up to step S211. When one end of the display content 122 is fixed and the predetermined operation 130 is continued (YES in step S205, and NO in step S211), the extension ratio of the first range 210 and the reduction ratio of the second range 212 become higher than those illustrated in FIGS. 11(d) and 11(e).

Meanwhile, in step S401, a description has been given of an example in which the first range 210 in the display content 122 is uniformly extended and the second range 212 in the display content 122 is uniformly reduced. However, the present invention is not limited thereto, and it is possible to appropriately select a variation in transformation.

For example, the extension of the display content may be performed at an equal magnification or an unequal magnification. Alternatively, a transformation amount may be obtained in accordance with a transformation ratio corresponding to a distance and a movement amount between one end and a position of a predetermined operation, and the extension or reduction may be performed for each portion of the display content. In addition, the extension or reduction of the display content may be appropriately performed by a combination of various manners.

In the present exemplary embodiment, a description has been given of an example in which an operation direction side is extended in a moving axis direction from the position of the predetermined operation 130 and a side opposite to an operation direction is reduced in the moving axis direction, but the operation direction side may be reduced in the moving axis direction and a side opposite to the operation direction may be extended in the moving axis direction.

In the present exemplary embodiment, a description has been given of an example in which extension or reduction is performed in a moving axis direction of the predetermined operation 130, but extension or reduction may be performed in a direction perpendicular to the moving axis direction.

As described above, according to the display control device 400 of the exemplary embodiment of the present invention, the same effects as those in the above-described exemplary embodiment are exhibited. Further, since the display content 122 can be transformed by different transformation methods and different transformation amounts between ranges separated based on an operation position, a user easily recognizes that the display content is transformed by an operation, and thus it is possible to intuitively notify the user that the display content is not moved any further by an operation.

In addition, for example, when the display content 122 is only extended in accordance with an operation amount, the amount of information displayed is reduced. In the present exemplary embodiment, it is possible to maintain the amount of information displayed by simultaneously extending and reducing the display content.

As described above, although the exemplary embodiments of the present invention have been set forth with reference to the drawings, they are merely illustrative of the present invention, and various configurations other than those stated above may be adopted.

For example, in the present invention, a display control unit may transform a display content in units of dots. The display content is transformed in units of dots, and thus it is possible to smoothly transform the display content 122. For example, when the display target 110 is a document file, a display character may also be enlarged or reduced. According to such a configuration, it is possible to notify a user that that a display content is not moved any further by an operation without giving an uncomfortable feeling to the user.

When the display content 122 of the above-described exemplary embodiment is extended or reduced at an equal magnification, an extension ratio and a reduction ratio which are determined in accordance with an operation amount are gradually changed. In addition, when the display content 122 is extended or reduced at an unequal magnification from one end fixed to the other end, an extension ratio and a reduction ratio which are determined in accordance with a distance between one end of the display content 122 and each portion of the display content in a direction other than that of the one end are also gradually changed, in addition to the extension ratio and the reduction ratio which are determined in accordance with the operation amount.

In the present invention, a display content may include a plurality of items.

The display control unit may transform a display content in a stepwise manner in accordance with a transformation amount which is determined for each item of the display content.

The item is each data of a list, or the like, and an extension ratio may be discretely changed for each item. Accordingly, a user easily confirms a display content for each item, and it is possible to intuitively notify the user that the display content is not moved any further by an operation.

In addition, in the above-described exemplary embodiment, a reference position for transforming the display content 122 is assumed to be one end of the display content 122 which is fixed, but the present invention is not limited thereto.

The reference position for transformation may be set to be an operation position of the predetermined operation 130, instead of being set to be one end of the display content 122 which is fixed. In a case of reduction, when the reduction is performed based on one end, an image in which the display content 122 is reduced so as to be gradually dragged in one end direction opposite to an operation direction is obtained. At this time, the display frame 120 may also be reduced together with the display content 122. Alternatively, the display frame 120 may remain as it is, only the display content 122 may be reduced, and a background other than the display target 110, or the like may be displayed in a vacant region. When the reduction is performed based on the operation position, an image in which the display content 122, which is reduced, follows a user's operation is obtained. In a case of extension, when the extension is performed based on one end, an image in which the display content 122 is attached to a user's operation from one end side thereof or passes an operation position and spreads in an operation direction is obtained. When the extension is performed based on the operation position, an image in which the display content 122 spreads while being dragged centering on a user's operation position is obtained.

In addition, in a case where the display target 110 is smaller than the display frame 120 and is movable within the display frame 120 by an operation, when the display target 110 is moved by the predetermined operation 130 and reaches an end of the display frame 120, the display content 122 of the display target 110 may be transformed at an extension ratio or a reduction ratio based on an operation amount. According to such a configuration, when the display target 110 is pressed against the end of the display frame 120, the transformation is performed like an image in which the display content 122 expands or contracts. Thereby, it is possible to intuitively notify a user that the display content is not moved any further by an operation.

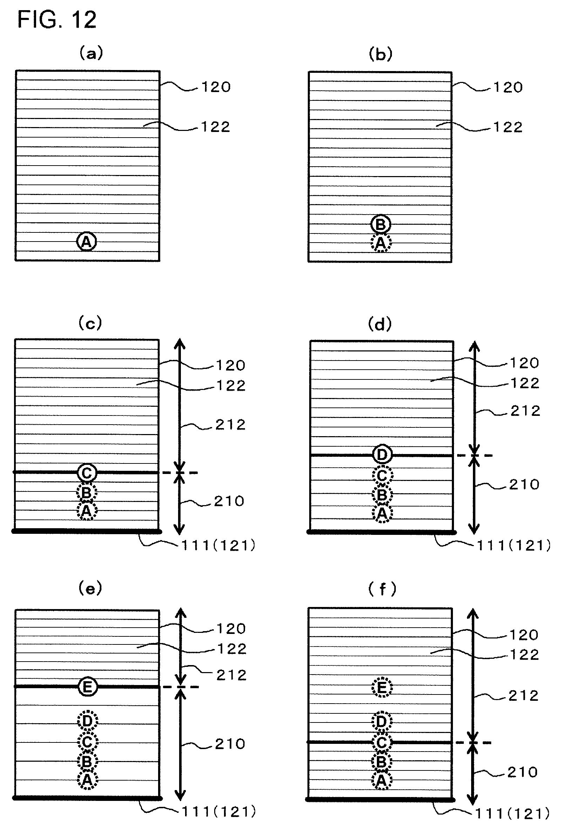

In addition, in step S401 of the flow chart illustrating an operation of the display control device 400 of the above-described exemplary embodiment of FIG. 10, other variations in a method of determining a transformation method and a transformation amount of the display content 122 will be described below with reference to FIGS. 12 to 14.

In each of the drawings of FIGS. 12 to 14, A, B, C, D, and E denote a touch position of the predetermined operation 130, in other words, a position of a finger within the display frame 120. The positions A, B, C, D, and E do not represent touching of a screen in a stepwise manner, but illustrate that a series of operations such as, for example, dragging which starts at the position A and finishes at the position E, sectioned at each point in time for the sake of convenience.

In an example illustrated in FIGS. 12, only a first range is uniformly transformed in accordance with an operation amount, and a second range is scrolled in an operation direction as it is without being transformed.

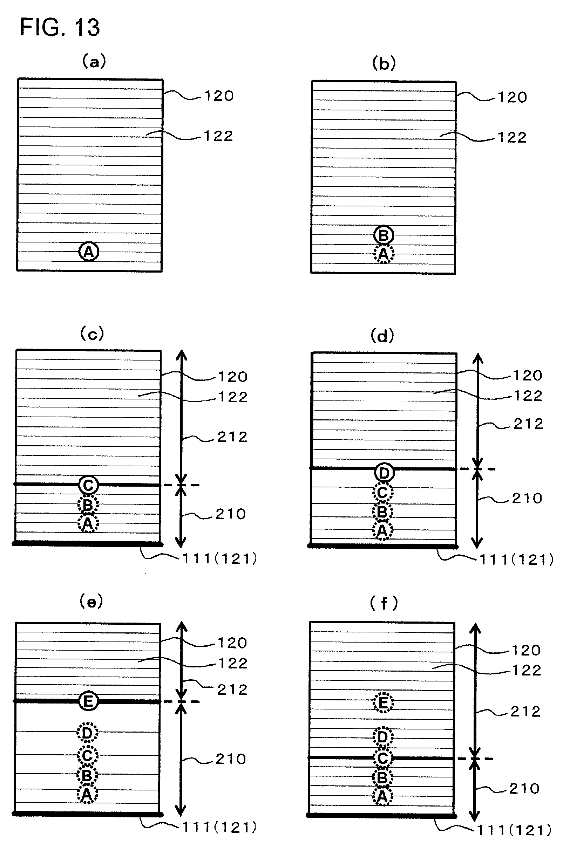

In an example illustrated in FIGS. 13, a first range is transformed by increasing an extension ratio as a distance between one end and each portion increases, and also increasing an extension ratio in accordance with an operation amount. A second range is scrolled in an operation direction as it is without being transformed.

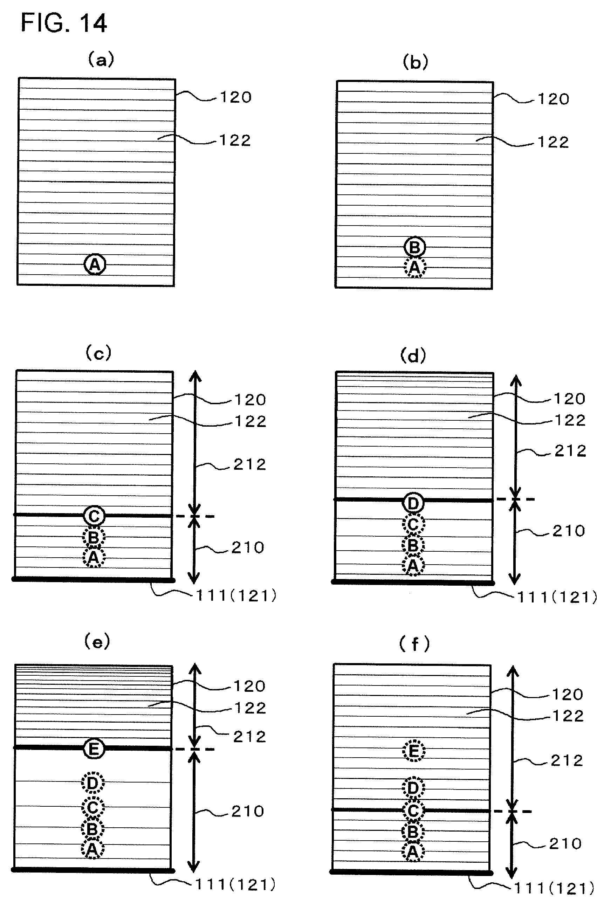

In an example illustrated in FIGS. 14, a first range is transformed by increasing an extension ratio as a distance between one end and each portion increases, and also increasing an extension ratio in accordance with an operation amount. A second range is transformed by increasing a reduction ratio as a distance between one end and each portion increases, and also by increasing a reduction ratio in accordance with an operation amount.

Specifically, as illustrated in FIGS. 12 (a) and 12(b), when a predetermined operation 130 such as, for example, dragging is performed from the position A to the position B within the display frame 120, the display target 110 is scrolled upward within the display frame 120 in accordance with the obtained position (operation amount) of the predetermined operation 130, and the display region 112 is moved below the display target 110.

In this example, the operation amount refers to a distance of the predetermined operation 130, for example, a distance between the position A and the position B. As the operation amount increases (distance becomes longer), the transformation ratio (herein, an extension ratio) also increases. The speed of the predetermined operation 130, the pressure of pressing-down, or the like may be added to the operation amount, and the transformation ratio may be increased as the speed or pressure becomes higher.

When the predetermined operation 130 is further advanced from the position B to the position C, one end 111 of the display target 110 having been scrolled upward reaches one end 121 of the display frame 120 as illustrated in FIG. 12(c). When there is an attempt to further advance the predetermined operation 130 in such a state, one end (one end 111 of the display target 110) of the display content 122 displayed within the display frame 120 is fixed to one end 121 of the display frame 120 by the display control unit 204.

When a state where one end of the display content 122 is fixed is set (YES in step S205 of FIG. 10), the display control unit 204 determines different transformation methods or different transformation amounts between the first range 210 and the second range 212, the first range 210 existing between one end of the display content 122 which is fixed and the position D of the predetermined operation 130 and the second range 212 existing between the other end opposite to the fixed end of the display content 122 and the position D of the predetermined operation 130, as illustrated in FIG. 12(d) (step S401 of FIG. 10). In addition, the display control unit 204 transforms the first range 210 and the second range 212 by the determined transformation method and transformation amount (step S105 of FIG. 10).

Specifically, as illustrated in FIG. 12(d), the first range 210 in the display content 122 is uniformly extended by a transformation amount according to an extension ratio which is obtained based on an operation amount from the position A to the position D of the predetermined operation 130, and the second range 212 in the display content 122 is scrolled in accordance with an operation amount without being transformed as it is.

As illustrated in FIG. 12(e), when predetermined operation 130 is advanced to the position E, an extension ratio and a reduction ratio are obtained based on an operation amount from the position A to the position E, and the first range 210 is extended at an extension ratio which is higher than that at a point in time when the predetermined operation 130 is set to be at the position D and the second range 212 is further scrolled in accordance with an operation amount without being transformed.

FIG. 12(d) illustrates a state where the first range 210 of the display content 122 is extended slightly compared to that in FIG. 12 (c) in accordance with an operation amount from the position A to the position D. FIG. 12(e) illustrates a state where the first range 210 of the display content 122 is extended more than that illustrated in FIG. 12(d) in accordance with an operation amount from the position A to the position E.

In a case where the predetermined operation 130 of a user is finished, when the display control unit 204 detects the termination of the predetermined operation 130 (YES in step S211), the display content 122 within the display frame 120 is returned from a transformation display state illustrated in FIG. 12(e) to a pre-transformation display state illustrated in FIG. 12(f) (step S213 of FIG. 10). Meanwhile, the state of the display content 122 in FIG. 12 (f) is the same as the state of the display content 122 in FIG. 12(c).

Thereafter, the display control device 400 terminates the process.

Next, the example of FIGS. 13 will be described. The operations illustrated in FIGS. 13 (a) to 13 (c) are the same as those in FIGS. 12(a) to 12(c) described above, and thus a detailed description thereof will not be repeated.

FIG. 13(d) illustrates a state where the display control unit 204 calculates a transformation ratio of each portion by multiplying an extension ratio, which is determined in accordance with an operation amount of the predetermined operation 130 from the position A to the position D, by a coefficient corresponding to, for example, a distance between one end of the display content 122 which is fixed and each portion of the display content in a direction other than that of the one end so that the extension ratio becomes higher as the distance becomes longer, thereby transforming each portion of the first range 210 of the display content 122. The second range 212 is scrolled in accordance with the operation amount without being transformed as it is.

In addition, FIG. 13 (e) illustrates a state where the display control unit 204 calculates a transformation ratio of each portion of the first range 210 by multiplying an extension ratio, which is determined in accordance with an operation amount of the predetermined operation 130 from the position A to the position E, by a coefficient corresponding to a distance between one end of the display content 122 which is fixed and each portion of the display content in a direction other than that of the one end, thereby transforming each portion of the first range 210 of the display content 122 as illustrated in FIG. 13(e). The second range 212 is scrolled in accordance with the operation amount without being transformed as it is.

FIG. 13(d) illustrates a state where the first range 210 of the display content 122 is extended slightly compared to that in FIG. 13 (c) in accordance with an operation amount from the position A to the position D. FIG. 13(e) illustrates a state where the first range 210 of the display content 122 is extended more than that illustrated in FIG. 13(d) in accordance with an operation amount from the position A to the position E.

In addition, the operation of FIG. 13(f) is the same as that of FIG. 12(f), and thus a detailed description thereof will not be repeated.

Next, the example of FIGS. 14 will be described. The operations illustrated in FIGS. 14 (a) to 14 (c) are the same as those in FIGS. 12(a) to 12(c) described above, and thus a detailed description thereof will not be repeated.

FIG. 14(d) illustrates a state where the display control unit 204 calculates a transformation ratio of each portion of the first range 210 by multiplying an extension ratio, which is determined in accordance with an operation amount of the predetermined operation 130 from the position A to the position D, by a coefficient corresponding to, for example, a distance between one end of the display content 122 which is fixed and each portion of the display content in a direction other than that of the one end so that the extension ratio becomes higher as the distance becomes longer, thereby transforming each portion of the first range 210 of the display content 122.

Further, a state is illustrated where a transformation ratio of each portion of the second range 212 is calculated by multiplying a reduction ratio, which is determined in accordance with an operation amount of the predetermined operation 130 from the position A to the position D, by a coefficient corresponding to, for example, a distance between one end of the display content 122 which is fixed and each portion of the display content in a direction other than that of the one end so that the reduction ratio becomes higher as the distance becomes longer, thereby transforming each portion of the second range 212 of the display content 122.

In addition, FIG. 14 (e) illustrates a state where the display control unit 204 calculates a transformation ratio of each portion of the first range 210 by multiplying an extension ratio, which is determined in accordance with an operation amount of the predetermined operation 130 from the position A to the position E, by a coefficient corresponding to a distance between one end of the display content 122 which is fixed and each portion of the display content in a direction other than that of the one end, thereby transforming each portion of the first range 210 of the display content 122 as illustrated in FIG. 14(e).

Further, a state is illustrated where a transformation ratio of each portion of the second range 212 is calculated by multiplying a reduction ratio, which is determined in accordance with an operation amount of the predetermined operation 130 from the position A to the position E, by a coefficient corresponding to, for example, a distance between one end of the display content 122 which is fixed and each portion of the display content in a direction other than that of the one end so that the reduction ratio becomes higher as the distance becomes longer, thereby transforming each portion of the second range 212 of the display content 122.

FIG. 14(d) illustrates a state where the first range 210 of the display content 122 is extended slightly compared to that in FIG. 14 (c) and the second range 212 of the display region 112 is reduced slightly compared to that in FIG. 14 (c) in accordance with an operation amount from the position A to the position D. FIG. 14 (e) illustrates a state where the first range 210 of the display content 122 is extended more than that illustrated in FIG. 14 (d) and the second range 212 of the display region 112 is reduced less than that illustrated in FIG. 14(d) in accordance with an operation amount from the position A to the position E.

Meanwhile, the operation of FIG. 14 (f) is the same as that of FIG. 12(f), and thus a detailed description thereof will not be repeated.

Meanwhile, a description has been given of a configuration in which a range is divided into a first range and a second range based on a position of the predetermined operation 130. However, the present invention is not limited thereto, and transformation may be performed in accordance with an operation amount by a different transformation method or a different transformation ratio for each range which is determined in advance for each display frame 120 or display content 122 or for each item of the display content 122.

As mentioned above, although the present invention has been described with reference to the exemplary embodiments and examples, the present invention is not limited to the above-mentioned exemplary embodiments and examples. In the configurations and the details of the present invention, various changes and modifications as can be understood by those skilled in the art can be made within the scope of the present invention.

Hereinafter, an example of a reference configuration will be added.
1. A control method of a display control device, the method including:
   causing the display control device to
   receive a predetermined operation with respect to a display content which is displayed within a display frame in a display unit;
   obtain a position of the received predetermined operation; and
   transform an entirety of the display content displayed within the display frame by a transformation method and a transformation amount which are determined for each portion of the display content in accordance with a positional relationship between positions of position of predetermined operation relative to position of the display content within the display frame.
2. The control method of the display control device according to 1, wherein the display control device transforms the entirety of the display content in a state where at least one end of the display content is fixed.
3. The control method of the display control device according to 1 or 2, wherein the display control device further detects termination of the received predetermined operation, and returns the display content within the display frame from a transformation display state to a pre-transformation display state when the termination of the predetermined operation is detected.
4. The control method of the display control device according to any one of 1 to 3, wherein the display control device obtains an operation amount of the received predetermined operation, and uniformly transforms the display content by a transformation amount which is obtained in accordance with a transformation ratio corresponding to the obtained operation amount of the predetermined operation.
5. The control method of the display control device according to any one of 1 to 4, wherein the display control device obtains an operation amount of the received predetermined operation, and transforms, in a state where at least one end of the display content is fixed, each portion of the display content by a transformation amount which is determined in accordance with a transformation ratio corresponding to a distance between the one end and each portion of the display content in a direction other than that of the one end and the obtained operation amount of the predetermined operation.
6. The control method of the display control device according to any one of 1 to 5, wherein the display control device obtains an operation amount of the received predetermined operation, and moves a display region of a display target displayed within the display frame in accordance with the obtained operation amount of the predetermined operation to thereby change the display content.
7. The control method of the display control device according to any one of 1 to 6, wherein the display control device transforms the display content in units of dots.
8. The control method of the display control device according to any one of 1 to 7,
   wherein the display content includes a plurality of items, and
   wherein the display control device transforms the display content in a stepwise manner by the transformation amount which is determined for each of the items of the display content.
9. The control method of the display control device according to any one of 1 to 8, wherein in a state where at least one end of the display content is fixed, the display control device transforms the display content by different transformation methods or different transformation amounts between a first range and a second range, the first range existing between the fixed end and the position of the predetermined operation and the second range existing between the other end opposite to the fixed end of the display content and the position of the predetermined operation.
10. The control method of the display control device according to 9, wherein the display control device extends the display content in the first range.
11. The control method of the display control device according to 9 or 10, wherein the display control device reduces the display content in the second range.
12. A program causing a computer to execute:
   a procedure of receiving a predetermined operation with respect to a display content which is displayed within a display frame in a display unit;
   a procedure of obtaining a position of the received predetermined operation; and
   a procedure of transforming an entirety of the display content displayed within the display frame by a transformation method and a transformation amount which are determined for each portion of the display content in accordance with a positional relationship between positions of position of predetermined operation relative to position of the display content within the display frame.
13. The program according to 12, causing a computer to execute a procedure of transforming the entirety of the display content in a state where at least one end of the display content is fixed, in the procedure of transforming the entirety of the display content.
14. The program according to 12 or 13, causing a computer to execute a procedure of further detecting termination of the received predetermined operation in the procedure of receiving the predetermined operation, and to execute a procedure of returning the display content within the display frame from a transformation display state to a pre-transformation display state when the termination of the predetermined operation is detected, in the procedure of transforming the entirety of the display content.
15. The program according to any one of 12 to 14, causing a computer to execute a procedure of obtaining an operation amount of the received predetermined operation and a procedure of uniformly transforming the display content by a transformation amount which is determined in accordance with a transformation ratio corresponding to the obtained operation amount of the predetermined operation, in the procedure of transforming the entirety of the display content.
16. The program according to any one of 12 to 15, causing a computer to execute a procedure of obtaining an operation amount of the received predetermined operation and a procedure of transforming each portion of the display content by a transformation amount which is determined in accordance with a transformation ratio corresponding to a distance between the one end and each portion of the display content in a direction other than that of the one end and the obtained operation amount of the predetermined operation, in the procedure of transforming the entirety of the display content.
17. The program according to any one of 12 to 16, causing a computer to execute a procedure of obtaining an operation amount of the received predetermined operation and a procedure of moving a display region of a display target displayed within the display frame in accordance with the obtained operation amount of the predetermined operation to thereby change the display content, in the procedure of transforming the entirety of the display content.
18. The program according to any one of 12 to 17, causing a computer to execute a procedure of transforming the display content in units of dots, in the procedure of transforming the entirety of the display content.
19. The program according to any one of 12 to 18,
   wherein the display content includes a plurality of items, and
   wherein the program causes a computer to execute a procedure of transforming the display content in a stepwise manner by the transformation amount which is determined for each of the items of the display content, in the procedure of transforming the entirety of the display content.
20. The program according to any one of 12 to 19, causing a computer to execute, in a state where at least one end of the display content is fixed, a procedure of transforming the display content by different transformation methods or different transformation amounts between a first range and a second range, the first range existing between the fixed end and the position of the predetermined operation and the second range existing between the other end opposite to the fixed end of the display content and the position of the predetermined operation, in the procedure of transforming the entirety of the display content.
21. The program according to 20, causing a computer to execute a procedure of extending the display content in the first range, in the procedure of transforming the entirety of the display content.
22. The program according to 20 or 21, causing a computer to execute a procedure of reducing the display content in the second range, in the procedure of transforming the entirety of the display content.

This application claims priority from Japanese Patent Application No. 2013-111384 filed on May 27, 2013, the content of which is incorporated herein by reference in its entirety.

## Claims

1. A display control device comprising:
an operation reception unit that receives a predetermined operation with respect to a display content which is displayed within a display frame in a display unit; and
a display control unit that obtains a position of the predetermined operation received by the operation reception unit, and transforms an entirety of the display content displayed within the display frame by a transformation method and a transformation amount which are determined for each portion of the display content in accordance with a positional relationship between positions of position of predetermined operation relative to position of the display content within the display frame.

2. The display control device according to claim 1, wherein the display control unit transforms the entirety of the display content in a state where at least one end of the display content is fixed.

3. The display control device according to claim 1 or 2,
wherein the operation reception unit further detects termination of the received predetermined operation, and
wherein when the termination of the predetermined operation is detected by the operation reception unit, the display control unit returns the display content within the display frame from a transformation display state to a pre-transformation display state.

4. The display control device according to any one of claims 1 to 3, wherein the display control unit obtains an operation amount of the predetermined operation received by the operation reception unit, and uniformly transforms the display content by a transformation amount which is obtained in accordance with a transformation ratio corresponding to the obtained operation amount of the predetermined operation.

5. The display control device according to any one of claims 1 to 4, wherein the display control unit obtains an operation amount of the predetermined operation received by the operation reception unit and transforms, in a state where at least one end of the display content is fixed, each portion of the display content by a transformation amount which is determined in accordance with a transformation ratio corresponding to a distance between the one end and each portion of the display content in a direction other than that of the one end and the obtained operation amount of the predetermined operation.

6. The display control device according to any one of claims 1 to 5, wherein the display control unit obtains an operation amount of the predetermined operation received by the operation reception unit, and moves a display region of a display target displayed within the display frame in accordance with the obtained operation amount of the predetermined operation to thereby change the display content.

7. The display control device according to any one of claims 1 to 6, wherein the display control unit transforms the display content in units of dots.

8. The display control device according to any one of claims 1 to 7,
wherein the display content includes a plurality of items, and
wherein the display control unit transforms the display content in a stepwise manner by the transformation amount which is determined for each of the items of the display content.

9. The display control device according to any one of claims 1 to 8, wherein in a state where at least one end of the display content is fixed, the display control unit transforms the display content by different transformation methods or different transformation amounts between a first range and a second range, the first range existing between the fixed end and the position of the predetermined operation and the second range existing between the other end opposite to the fixed end of the display content and the position of the predetermined operation.

10. The display control device according to claim 9, wherein the display control unit extends the display content in the first range.

11. The display control device according to claim 9 or 10, wherein the display control unit reduces the display content in the second range.

12. A control method of a display control device, the control method comprising:
receiving, by the display control device, a predetermined operation with respect to a display content which is displayed within a display frame in a display unit;
obtaining, by the display control device, a position of the received predetermined operation; and
transforming, by the display control device, an entirety of the display content displayed within the display frame by a transformation method and a transformation amount which are determined for each portion of the display content in accordance with a positional relationship between positions of position of predetermined operation relative to position of the display content within the display frame.

13. A program causing a computer to execute:
a procedure of receiving a predetermined operation with respect to a display content which is displayed within a display frame in a display unit;
a procedure of obtaining a position of the received predetermined operation; and
a procedure of transforming an entirety of the display content displayed within the display frame by a transformation method and a transformation amount which are determined for each portion of the display content in accordance with a positional relationship between positions of position of predetermined operation relative to position of the display content within the display frame.
